# EUROPEAN PATENT APPLICATION

(11) **EP 4 737 996 A1**
(43) Date of publication of application: **06.05.2026**
(21) Application number: 24832065.7
(22) Date of filing: 27.06.2024
(51) Int. Cl.: G02F 1/1339, G02F 1/13, G02F 1/1333

(54) **LIGHT CONTROL MEMBER AND LAMINATED PLATE**

(30) Priority: 28.06.2023 JP 2023106492; 12.04.2024 JP 2024064864
(71) Applicant: Dai Nippon Printing Co., Ltd., Tokyo 162-8001 (JP)
(72) Inventor: IKEZAWA, Takao, Tokyo 162-8001 (JP); TAMAKI, Atsushi, Tokyo 162-8001 (JP); SHIRAISHI, Isamu, Tokyo 162-8001 (JP); URIMOTO, Hideaki, Tokyo 162-8001 (JP); ASAI, Toshiaki, Tokyo 162-8001 (JP)
(74) Representative: Müller-Boré & Partner Patentanwälte PartG mbB
(86) International application number: PCT/JP2024/023441
(87) International publication number: WO 2025/005207

(57) **Abstract**

A light modulating member (20) includes a first member (30), a second member (40), a liquid crystal layer (50), a plurality of first bead spacers (60), and a plurality of second bead spacers (70). The first member (30) includes a first base member (31). The second member (40) includes a second base member (41) that is opposed to the first base member (31). The liquid crystal layer (50) is located between the first member (30) and the second member (40). The plurality of first bead spacers (60) and the plurality of second bead spacers (70) are provided between the first member (30) and the second member (40) so as to maintain a thickness of the liquid crystal layer (50). An average particle diameter of the second bead spacers (70) is larger than an average particle diameter of the first bead spacers (60). The second bead spacers (70) are softer than the first bead spacers (60).

## Description

### Technical Field

The present disclosure relates to a light modulating member and a laminated plate.

### Background Art

A light modulating member that can regulate visible light transmittance, such as the one disclosed in Patent Literature 1, is known. The light modulating member disclosed in Patent Literature 1 includes, for example, a liquid crystal layer containing liquid crystal molecules. The light modulating member including a liquid crystal layer can change visible light transmittance upon application of a voltage. The light modulating member including a liquid crystal layer is advantageous in that the change in the visible light transmittance is fast. The light modulating member is, for example, used for a transparent part of a partition member such as a window.

The liquid crystal layer is located between one pair of plate-shaped members each including a base member. Bead spacers are further located between the one pair of plate-shaped members. The bead spacers are in contact with the one pair of plate-shaped members. The bead spacers appropriately maintain a thickness of the liquid crystal layer. The bead spacers suppress movement of the liquid crystal molecules in the liquid crystal layer.

### Citation List

### Patent Literature

PTL 1: Japanese Unexamined Patent Application Publication No. 2018-5040

### Summary of Invention

### Technical Problem

When the light modulating member is exposed to a high temperature, the liquid crystal layer expands due to heat. This increases a gap between the bead spaces and the plate-shaped members. The liquid crystal molecules can move in the liquid crystal layer between the bead spacers and the plate-shaped members. In a case where the light modulating member including the liquid crystal layer is placed obliquely with respect to a horizontal direction, the liquid crystal molecules can move in the liquid crystal layer and shift downward in the vertical direction due to gravity. The concentrated liquid crystal molecules are visibly conspicuous from an outside of the light modulating member. This may degrade outer appearance of the light modulating member.

An object of the present disclosure is to suppress degradation of outer appearance of a light modulating member caused by uneven distribution of liquid crystal molecules.

### Solution to Problem

An embodiment of the present disclosure relates to the following [1] to [20].
[1] A light modulating member including: a first member including a first base member; a second member including a second base member opposed to the first base member; a liquid crystal layer located between the first member and the second member; and a plurality of first bead spacers and a plurality of second bead spacers that are provided between the first member and the second member so as to maintain a thickness of the liquid crystal layer, in which an average particle diameter of the second bead spacers is larger than an average particle diameter of the first bead spacers, and the second bead spacers are softer than the first bead spacers.
[2] The light modulating member according to [1], in which in a case where an amount of deformation of the first bead spacers and an amount of deformation of the second bead spacers are measured by applying a load to the first bead spacers and the second bead spacers up to 5 mN at a speed of 0.29 mN/sec by using a 50-µm square flat indenter, a ratio of the amount of deformation of the second bead spacers to the amount of deformation of the first bead spacers is equal to or more than 3.21 and equal to or less than 4.49.
[3] A light modulating member including: a first member including a first base member; a second member including a second base member opposed to the first base member; a liquid crystal layer located between the first member and the second member; and a plurality of first bead spacers and a plurality of second bead spacers that are provided between the first member and the second member so as to maintain a thickness of the liquid crystal layer, in which an average particle diameter of the second bead spacers is larger than an average particle diameter of the first bead spacers, and in a case where an amount of deformation of the first bead spacers and an amount of deformation of the second bead spacers are measured by applying a load to the first bead spacers and the second bead spacers up to 5 mN at a speed of 0.29 mN/sec by using a 50-µm square flat indenter, a ratio of the amount of deformation of the second bead spacers to the amount of deformation of the first bead spacers is equal to or more than 3.21 and equal to or less than 4.49.
[4] The light modulating member according to any one of [1] to [3], in which an amount of deformation of the second bead spacers measured by applying a load to the second bead spacers up to 5 mN at a speed of 0.29 mN/sec by using a 50-µm square flat indenter is equal to or more than 2.38 µm and equal to or less than 3.32 µm.
[5] A light modulating member including: a first member including a first base member; a second member including a second base member opposed to the first base member; a liquid crystal layer located between the first member and the second member; and a plurality of first bead spacers and a plurality of second bead spacers that are provided between the first member and the second member so as to maintain a thickness of the liquid crystal layer, in which an average particle diameter of the second bead spacers is larger than an average particle diameter of the first bead spacers, and an amount of deformation of the second bead spacers measured by applying a load to the second bead spacers up to 5 mN at a speed of 0.29 mN/sec by using a 50-µm square flat indenter is equal to or more than 2.38 µm and equal to or less than 3.32 µm.
[6] The light modulating member according to any one of [1] to [5], in which in a case where a load is applied to the second bead spacers up to 5 mN at a speed of 0.29 mN/sec by using a 50-µm square flat indenter, an amount by which the second bead spacers are deformed during five seconds where the load is maintained after the load reaches 5 mN is equal to or less than 0.04 µm.
[7] The light modulating member according to any one of [1] to [6], in which the average particle diameter of the second bead spacers is equal to or more than 110% and equal to or less than 130% of the average particle diameter of the first bead spacers.
[8] The light modulating member according to any one of [1] to [7], in which the number of second bead spacers is larger than the number of first bead spacers.
[9] The light modulating member according to any one of [1] to [8], in which a color of the first bead spacers and a color of the second bead spacers are black.
[10] The light modulating member according to any one of [1] to [9], in which the second bead spacers have adhesiveness.
[11] A laminated plate including: a first substrate and a second substrate that are opposed to each other; and the light modulating member according to any one of [1] to [10] that is located between the first substrate and the second substrate.
[12] The laminated plate according to [11], further including: a first joining layer that joins the first substrate and the light modulating member to each other; and a second joining layer that joins the second substrate and the light modulating member to each other.
[13] The laminated plate according to [12], in which a thickness of the first joining layer and a thickness of the second joining layer are uniform within a plane.
[14] The laminated plate according to [12] or [13], in which the first joining layer and the second joining layer are connected to each other by an insertion member.
[15] The laminated plate according to [14], in which a material of the insertion member is polyethylene terephthalate, polycarbonate, or an OCR.
[16] The laminated plate according to [12] or [13], in which an outer periphery fixation member is provided along outer peripheries of the first substrate, the first joining layer, the light modulating member, the second joining layer, and the second substrate.
[17] The laminated plate according to any one of [12] to [16], in which a gap layer is provided between the first joining layer and the light modulating member.
[18] The laminated plate according to [17], in which a reflection prevention layer is provided so as to face the gap layer.
[19] The laminated plate according to [18], in which the first substrate is tint glass.
[20] The laminated plate according to [17], in which the first substrate has an anti reflection function.

According to the present disclosure, degradation of outer appearance of a light modulating member caused by uneven distribution of liquid crystal molecules can be suppressed.

### Brief Description of Drawings

[Fig. 1] Fig. 1 is a perspective view of a mobile body including a light modulating member.
[Fig. 2] Fig. 2 is a plan view illustrating a state where visible light transmittance of the light modulating member has been adjusted to a high level.
[Fig. 3] Fig. 3 is a plan view illustrating a state where the visible light transmittance of the light modulating member has been adjusted to a low level.
[Fig. 4] Fig. 4 is a cross-sectional view of the light modulating member taken along line IV-IV of Fig. 2.
[Fig. 5] Fig. 5 is an enlarged view of a portion between a first member and a second member of the light modulating member and is a cross-sectional view illustrating a state at normal temperature.
[Fig. 6] Fig. 6 is an enlarged view of the portion between the first member and the second member of the light modulating member and is a cross-sectional view illustrating a state where the light modulating member has been heated to a high temperature.
[Fig. 7] Fig. 7 is a diagram for explaining an example of a method for manufacturing the light modulating member.
[Fig. 8] Fig. 8 is a diagram for explaining an example of a method for manufacturing the light modulating member.
[Fig. 9] Fig. 9 is a diagram for explaining an example of a method for manufacturing the light modulating member.
[Fig. 10] Fig. 10 is a diagram for explaining an example of a method for manufacturing the light modulating member.
[Fig. 11] Fig. 11 is a diagram for explaining an example of a method for manufacturing the light modulating member.
[Fig. 12] Fig. 12 is a graph illustrating a relationship of amounts of deformation under application of a load to first bead spacers and second bead spacers included in light modulating members according to Examples and Comparative Examples.
[Fig. 13] Fig. 13 is a cross-sectional view illustrating a laminated plate according to a first modification.
[Fig. 14] Fig. 14 is a cross-sectional view illustrating a laminated plate according to a second modification.
[Fig. 15] Fig. 15 is a cross-sectional view illustrating a laminated plate according to a third modification.
[Fig. 16] Fig. 16 is a cross-sectional view illustrating a laminated plate according to a fourth modification.
[Fig. 17] Fig. 17 is a cross-sectional view illustrating another example of the laminated plate according to the fourth modification.
[Fig. 18] Fig. 18 is a cross-sectional view illustrating a laminated plate according to a fifth modification.
[Fig. 19] Fig. 19 is a cross-sectional view illustrating another example of the laminated plate according to the fifth modification.
[Fig. 20] Fig. 20 is a cross-sectional view illustrating another example of the laminated plate according to the fifth modification.
[Fig. 21] Fig. 21 is a cross-sectional view illustrating a laminated plate according to a sixth modification.
[Fig. 22] Fig. 22 is a cross-sectional view illustrating another example of the laminated plate according to the sixth modification.
[Fig. 23] Fig. 23 is a cross-sectional view illustrating another example of the laminated plate according to the sixth modification.
[Fig. 24] Fig. 24 is a cross-sectional view illustrating a laminated plate according to a seventh modification.
[Fig. 25] Fig. 25 is a cross-sectional view illustrating another example of the laminated plate according to the seventh modification.
[Fig. 26] Fig. 26 is an enlarged view of a portion between a first member and a second member of a conventional light modulating member and is a cross-sectional view illustrating a state at normal temperature.
[Fig. 27] Fig. 27 is an enlarged view of the portion between the first member and the second member of the conventional light modulating member and is a cross-sectional view illustrating a state where the light modulating member has been heated to a high temperature.

### Description of Embodiments

An embodiment of the present disclosure is described below with reference to the drawings. In the drawings attached to the present specification, scales, dimensional ratios, and the like are changed and exaggerated from actual ones as appropriate for ease of illustration and understanding. Constituent elements and the like illustrated in one drawing may be omitted in another drawing.

In the present specification, terms that specify shapes, geometric conditions, and degrees of the shapes and geometric conditions, such as "parallel", "orthogonal", and "identical", and numerical values such as lengths and angles, are not to be interpreted strictly, but are to be construed to include ranges that allow for similar functions.

In the present specification, a direction normal to a plate-shaped member is a direction normal to a plate surface of the target plate-shaped member. The term "plate surface" refers to a surface that coincides with a target plate-shaped member when the target plate-shaped member is viewed in its entirety and macroscopically. The same applies when "film", "sheet", or the like is used instead of "plate".

In the present specification, in a case where a plurality of candidates are given for an upper limit and a lower limit of a parameter, the parameter may be a numerical range combining any one of the candidates for the upper limit and any one of the candidates for the lower limit.

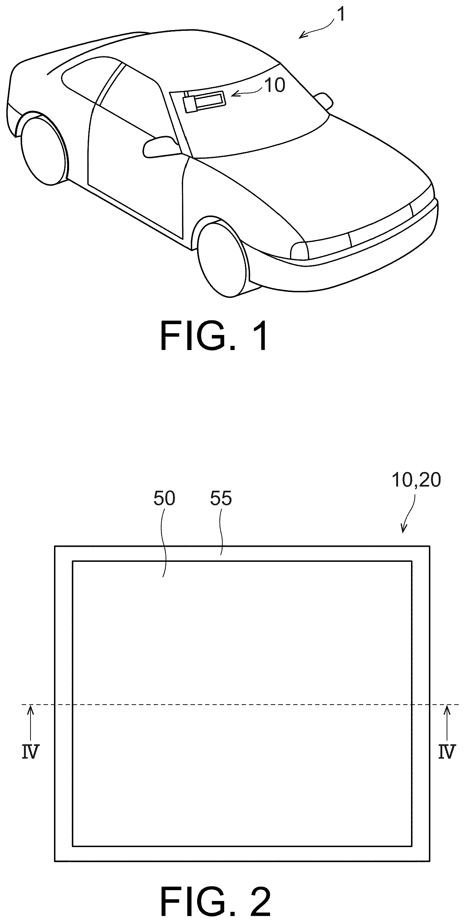

Fig. 1 is a perspective view of a mobile body 1 including a laminated plate 10 according to the embodiment. The laminated plate 10 can be, for example, applied to a member that partitions a space. The laminated plate 10 is used as a window or a windshield device of a mobile body such as an automobile, a train, a ship, or an airplane or a transparent part of a partition member such as a part of a window or a partition of an exterior wall, an interior wall, a door, or the like of a building. In the example illustrated in Fig. 1, the laminated plate 10 is used as a sun visor of an automobile. The laminated plate 10 may have any shape corresponding to a member to which the laminated plate 10 is applied. The laminated plate 10 includes a light modulating member 20 that can adjust visible light transmittance. Since visible light transmittance is adjusted by the light modulating member 20, the sun visor adjusts solar light or the like entering the automobile and provide good visibility for occupants of the automobile. The laminated plate 10 is not limited to the example illustrated in Fig. 1, and may be used as a side window, a rear window, a side mirror, or the like of the mobile body 1. The mobile body 1 is not limited to the example illustrated in Fig. 1, and may be a ship, a railroad vehicle, an airplane, or the like.

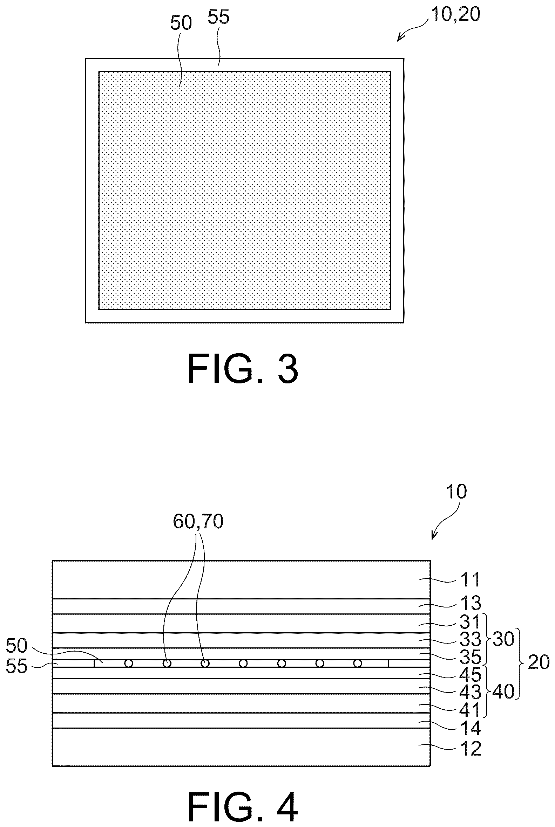

Fig. 2 is a plan view of the light modulating member 20 and the laminated plate 10 in a state where the visible light transmittance has been adjusted to a high level. Fig. 3 is a plan view of the light modulating member 20 and the laminated plate 10 in a state where the visible light transmittance has been adjusted to a low level. The plan views of the laminated plate 10 and the light modulating member 20 are views of the laminated plate 10 and the light modulating member 20 viewed in plan. Viewing the laminated plate 10 and the light modulating member 20 in plan is observing the laminated plate 10 and the light modulating member 20 in a direction normal to a plate surface thereof. Fig. 4 is a cross-sectional view of the laminated plate 10 and the light modulating member 20 taken along line IV-IV of Fig. 2. As illustrated in Fig. 4, the laminated plate 10 includes a first substrate 11 and a second substrate 12, a first joining layer 13 and a second joining layer 14, and the light modulating member 20. The first substrate 11 and the second substrate 12 are opposed to each other. A plate surface of the first substrate 11 faces a plate surface of the second substrate 12. The light modulating member 20 is located between the first substrate 11 and the second substrate 12. The first joining layer 13 is located between the first substrate 11 and the light modulating member 20. The second joining layer 14 is located between the second substrate 12 and the light modulating member 20.

The first substrate 11 and the second substrate 12 preferably have high visible light transmittance so that the visible light transmittance of the laminated plate 10 can be made high in a case where the visible light transmittance of the light modulating member 20 is adjusted to a high level. The visible light transmittance of the first substrate 11 and the second substrate 12 may be equal to or more than 20%, may be equal to or more than 45%, may be equal to or more than 80%, or may be equal to or more than 85%. A material of the first substrate 11 and the second substrate 12 may be soda-lime glass. A thickness of the first substrate 11 and a thickness of the second substrate 12 may be equal to or more than 1 mm, may be equal to or more than 2 mm, may be equal to or more than 3 mm, may be equal to or more than 3.5 mm, may be equal to or less than 10 mm, may be equal to or less than 8 mm, or may be equal to or less than 5 mm. The first substrate 11 and the second substrate 12 having such a thickness are good in strength and optical characteristics. The first substrate 11 and the second substrate 12 may be made of an identical material and may have an identical configuration or may be different from each other in at least one of the material and configuration.

In the present specification, the visible light transmittance is specified as an average value of total light transmittance at each wavelength, measured at 1 nm intervals within a wavelength range from 380 nm to 780 nm by using a spectrophotometer ("UV-3600i Plus" produced by Shimadzu Corporation, which is a product compliant with JIS K0115). An incident angle during measurement of the visible light transmittance is set to 0° in a case where no specific transmission direction is defined. The incident angle is an angle of a traveling direction of incident light with respect to a direction normal to an incident surface and is a value less than 90°.

The first substrate 11 and the second substrate 12 each have a flat two-dimensional surface shape. The surface shape of each of the first substrate 11 and the second substrate 12 is not limited to this, and may be a curved three-dimensional shape. The first substrate 11 and the second substrate 12 may each be formed in advance into a shape having a curved surface that is curved toward one surface side. In this case, the first substrate 11 and the second substrate 12 may each be formed so that a surface thereof on the first substrate 11 side is curved toward the second substrate 12 side or may each be formed so that the surface thereof on the second substrate 12 is curved toward the first substrate 11 side. The first substrate 11 and the second substrate 12 may each be inorganic glass or may each be resin glass. As the resin glass, for example, polycarbonate, acrylic, or the like may be used. In a case where inorganic glass is used as the first substrate 11 and the second substrate 12, the laminated plate 10 that is good in heat resistance and scratch resistance is obtained. On the other hand, in a case where resin glass is used as the first substrate 11 and the second substrate 12, the laminated plate 10 can be reduced in weight. Furthermore, the first substrate 11 and the second substrate 12 may be subjected to a surface treatment such as a hard coat as necessary.

The first joining layer 13 joins the first substrate 11 and the light modulating member 20 to each other. The second joining layer 14 joins the second substrate 12 and the light modulating member 20 to each other. The first joining layer 13 and the second joining layer 14 preferably have high visible light transmittance so that the visible light transmittance of the laminated plate 10 can be made high in a case where the visible light transmittance of the light modulating member 20 is adjusted to a high level. The visible light transmittance of the first joining layer 13 and the second joining layer 14 may be equal to or more than 90%. A material of the first joining layer 13 and the second joining layer 14 may be any of various adhesive or tacky materials. The material of the first joining layer 13 and the second joining layer 14 may be polyvinyl butyral, may be an ethylene-vinyl acetate copolymer, may be a cycloolefin polymer, may be an ionomer, may be Optically Clear Adhesive (OCA), may be Optically Clear Resin (OCR), may be a combination of OCA and OCR, or may be a combination of polyvinyl butyral and OCR. A thickness of the first joining layer 13 and a thickness of the second joining layer 14 may be equal to or more than 0.15 mm or may be equal to or less than 1 mm. The first joining layer 13 and the second joining layer 14 may be made of an identical material and may have an identical configuration or may be different from each other in at least one of the material and configuration.

The visible light transmittance of the light modulating member 20 is adjustable. The visible light transmittance which the light modulating member 20 can take may be equal to or more than 0.5%, may be equal to or more than 1%, may be equal to or more than 10%, may be equal to or more than 20%, may be equal to or less than 75%, may be equal to or less than 70%, may be equal to or less than 45%, or may be equal to or less than 40%. The light modulating member 20 is a plate-shaped member. A thickness of the light modulating member 20 may be equal to or more than 0.1 mm or may be equal to or less than 0.5 mm.

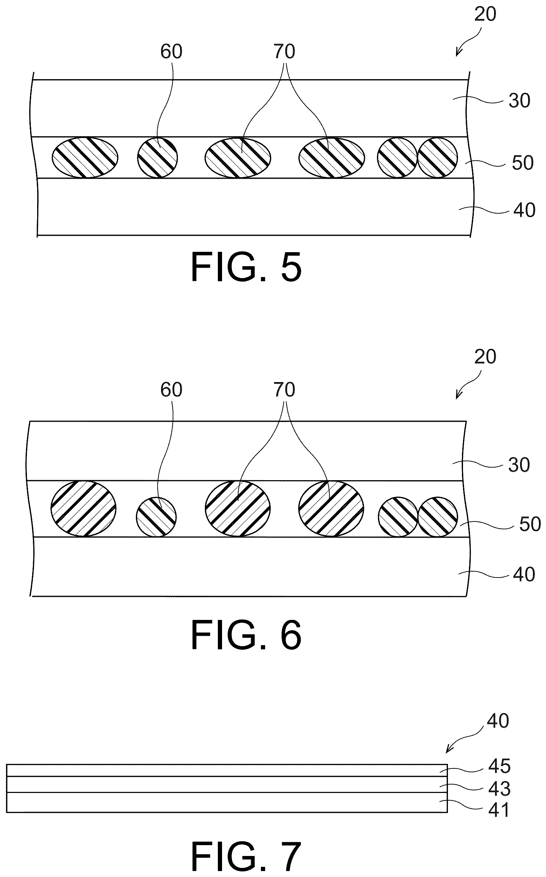

As illustrated in Figs. 2 to 4, the light modulating member 20 includes a first member 30, a second member 40, a liquid crystal layer 50, and a seal member 55. The liquid crystal layer 50 is located between the first member 30 and the second member 40. The seal member 55 surrounds the liquid crystal layer 50. Fig. 5 is an enlarged view of a portion between the first member 30 and the second member 40 of the light modulating member 20. In Fig. 5, the configurations of the first member 30 and the second member 40 are omitted for ease of illustration. As illustrated in Fig. 5, the light modulating member 20 further includes a plurality of first bead spacers 60 and a plurality of second bead spacers 70. The light modulating member 20 may include another member (not illustrated) that is intended to achieve a specific function.

The first member 30 and the second member 40 each have a plate shape. The first member 30 and the second member 40 are placed so that plate surfaces thereof are opposed to each other. The first member 30 and the second member 40 sandwich the liquid crystal layer 50. The first member 30 includes a first base member 31, a first electrode 33, and a first alignment film 35 in this order. The second member 40 includes a second base member 41, a second electrode 43, and a second alignment film 45 in this order. The second base member 41 is opposed to the first base member 31. In the example illustrated in Fig. 4, the first alignment film 35 of the first member 30 and the second alignment film 45 of the second member 40 face each other.

The first base member 31 supports the first electrode 33 and the first alignment film 35. The second base member 41 supports the second electrode 43 and the second alignment film 45. The first base member 31 and the second base member 41 have a thin plate shape. The first base member 31 and the second base member 41 are transparent. A thickness of the first base member 31 and the second base member 41 may be equal to or more than 30 µm and equal to or less than 250 µm. The first base member 31 and the second base member 41 having such a thickness are good in strength and optical characteristics. A material of the first base member 31 and the second base member 41 may be glass, an acetyl cellulose resin such as triacetyl cellulose (TAC), a polyester resin such as polyethylene terephthalate (PET) or polyethylene naphthalate (PEN), a polyolefin resin such as polyethylene (PE), polypropylene (PP), polystyrene, polymethylpentene, or EVA, a vinyl resin such as polyvinyl chloride or polyvinylidene chloride, an acrylic resin, a polyurethane resin, polysulfone (PSF), polyethersulfone (PES), polycarbonate (PC), polyether, polyether ketone (PEK), (meth)acrylonitrile, a cycloolefin polymer (COP), or a cycloolefin copolymer, or the like, and is preferably a resin such as polycarbonate or polyethylene terephthalate.

The term "transparent" means that the visible light transmittance is equal to or more than 40%, equal to or more than 70%, or equal to or more than 80%.

The first electrode 33 and the second electrode 43 are separate from each other. The first electrode 33 extends along the first base member 31. The second electrode 43 extends along the second base member 41. The first electrode 33 and the second electrode 43 are not electrically directly connected in the light modulating member 20. A voltage is applied to the first electrode 33 and the second electrode 43 through a wire (not illustrated). By changing the voltage applied to the first electrode 33 and the second electrode 43, the visible light transmittance of the light modulating member 20 can be adjusted. The first electrode 33 and the second electrode 43 are transparent. The first electrode 33 and the second electrode 43 may be a transparent conductive film made of indium tin oxide (ITO), a mesh made of copper, a carbon nanotube, or a silver nanowire.

The first alignment film 35 and the second alignment film 45 regulate orientation of liquid crystal molecules in the liquid crystal layer 50. The first alignment film 35 and the second alignment film 45 have a thin film shape. A thickness of the first alignment film 35 and a thickness of the second alignment film 45 may be equal to or more than 10 nm, may be equal to or more than 45 nm, may be equal to or less than 1000 nm, or may be equal to or less than 150 nm. The first alignment film 35 and the second alignment film 45 may be produced by performing a rubbing process on a resin layer such as polyimide, may be produced by irradiating a polymer film with linearly polarized ultraviolet light to selectively react polymer chains along a polarization direction based on a photoalignment method, or may be produced by molding a fine linear concavo-convex pattern produced through a rubbing process. The first alignment film 35 and the second alignment film 45 may be produced by another method. The first alignment film 35 and the second alignment film 45 may be produced without a rubbing process.

The liquid crystal layer 50 contains a plurality of liquid crystal molecules. By applying a voltage to the first electrode 33 and the second electrode 43, an electric field is formed in the liquid crystal layer 50. The orientation of the liquid crystal molecules is changed by the electric field. The orientation of the liquid crystal molecules may be changed by changing the electric field formed in the liquid crystal layer 50, therefore, by changing the voltage applied to the first electrode 33 and the second electrode 43. The visible light transmittance of the liquid crystal layer 50 can change depending on the orientation of the liquid crystal molecules. A driving method of the liquid crystal molecules is not particularly limited, and may be a Vertical Alignment (VA) method, a Twisted Nematic (TN) method, an In Plane Switching (IPS) method, a Guest Host (GH) method, or a modified version of any of these methods. The liquid crystal layer 50 preferably contains no polymerizable compound.

The light modulating member 20 may further include two polarization plates provided so that the liquid crystal layer 50 is interposed therebetween depending on the driving method employed for the liquid crystal molecules of the liquid crystal layer 50. The first member 30 and the second member 40 may each further include a polarization plate. The first alignment film 35 in the first member 30 and the second alignment film 45 in the second member 40 may be omitted depending on the driving method employed for the liquid crystal molecules of the liquid crystal layer 50.

A case where the driving method of the liquid crystal molecules contained in the liquid crystal layer 50 is the GH method is described below as an example. According to the GH method, the liquid crystal layer 50 further contains a dichroic dye composition. According to the GH method, the orientation of the liquid crystal molecules and dichroic dye composition is regulated to horizontal orientation by the first alignment film 35 and the second alignment film 45 in a state where no voltage is applied to the first electrode 33 and the second electrode 43. As a result, the visible light transmittance of the liquid crystal layer 50 is low. The liquid crystal molecules and the dichroic dye composition approach orientation perpendicular to the first alignment film 35 and the second alignment film 45 due to an electric field in a state where a voltage is applied between the first electrode 33 and the second electrode 43. As a result, the visible light transmittance of the liquid crystal layer 50 is high. By changing the orientation of the liquid crystal molecules and the dichroic dye composition, the visible light transmittance of the liquid crystal layer 50 can be changed, as illustrated in Figs. 2 and 3.

The orientation of the liquid crystal molecules and the dichroic dye composition may be regulated to vertical orientation by the first alignment film 35 and the second alignment film 45 in a state where no voltage is applied to the first electrode 33 and the second electrode 43, and the orientation of the liquid crystal molecules and the dichroic dye composition may approach horizontal orientation with respect to the first alignment film 35 and the second alignment film 45 due to an electric field in a state where a voltage is applied between the first electrode 33 and the second electrode 43. That is, the visible light transmittance of the liquid crystal layer 50 may be high in the state where no voltage is applied to the first electrode 33 and the second electrode 43, and the visible light transmittance of the liquid crystal layer 50 may be low in the state where a voltage is applied between the first electrode 33 and the second electrode 43.

The liquid crystal layer 50 has a low haze value in the state where the visible light transmittance is low. The haze value of the light modulating member 20 including the liquid crystal layer 50 may be equal to or less than 30% or may be equal to or less than 15% in the state where the visible light transmittance is low.

The haze value is defined as a ratio of diffuse transmittance to total light transmittance of a target object, and represents a diffusion rate of light passing through the target object. The total light transmittance is a ratio of an amount of light transmitted through the target object to an amount of light incident on the target object. The diffuse transmittance is a ratio of the amount of light transmitted through the target object in directions other than a straight direction, that is, the amount of light that is transmitted in a scattered manner to the amount of light incident on the target object. The total light transmittance and the diffuse transmittance are measured by a haze meter compliant with JIS K7361 (e.g., NDH7000 produced by NIPPON DENSHOKU INDUSTRIES CO., LTD.).

A thickness of the liquid crystal layer 50 may be equal to or more than 1 µm, may be equal to or more than 10 µm, may be equal to or less than 20 µm, or may be equal to or less than 15 µm. The thickness of the liquid crystal layer 50 is maintained by the first bead spacers 60 and the second bead spacers 70. The thickness of the liquid crystal layer 50 can change depending on a temperature. For example, when the temperature of the liquid crystal layer 50 rises from 23°C to 100°C, the thickness of the liquid crystal layer 50 increases by approximately 6%.

The seal member 55 extends so as to surround the liquid crystal layer 50. The seal member 55 prevents leakage of the liquid crystal layer 50 and adheres to the first member 30 and the second member 40 to fix the first member 30 and the second member 40 to each other. A material of the seal member 55 may be a thermosetting resin, may be an ultraviolet curable resin, or may be a thermally and ultraviolet curable resin. Specifically, the material of the seal member 55 may be an acrylic resin, may be an epoxy resin, or may be an epoxy-acrylic resin.

The plurality of first bead spacers 60 and the plurality of second bead spacers 70 are located between the first member 30 and the second member 40 so as to maintain the thickness of the liquid crystal layer 50. In other words, the first bead spacers 60 and the second bead spacers 70 maintain the thickness of the liquid crystal layer 50 so that the thickness of the liquid crystal layer 50 does not become equal to or less than a predetermined thickness. In still other words, the first bead spacers 60 and the second bead spacers 70 secure a space of a predetermined size or more between the first member 30 and the second member 40. The first bead spacers 60 and the second bead spacers 70 each preferably have a spherical shape or a shape close to a spherical shape so that an appropriate space is secured between the first member 30 and the second member 40 irrespective of orientation of the first bead spacers 60 and the second bead spacers 70. An average particle diameter of the second bead spacers 70 is larger than an average particle diameter of the first bead spacers 60. The average particle diameter of the second bead spacers 70 may be equal to or more than 110% of the average particle diameter of the first bead spacers 60 or may be equal to or less than 130% of the average particle diameter of the first bead spacers 60. The average particle diameter of the first bead spacers 60 may be equal to or more than 1 µm, may be equal to or more than 10 µm, may be equal to or less than 20 µm, or may be equal to or less than 15 µm. A difference between the average particle diameter of the first bead spacers 60 and the average particle diameter of the second bead spacers 70 may be equal to or more than 1 µm or may be equal to or less than 5 µm.

The average particle diameter of the first bead spacers 60 and the average particle diameter of the second bead spacers 70 are specified by the following method. A side surface of the liquid crystal layer 50 in a thickness direction is observed by using a scanning electron microscope (Hitachi High-Technologies S-4800) under conditions of an accelerating voltage of 3.0 kV and a magnification of 50,000 over an area of 1 mm². The number of observed bead spacers is counted. The side surface of the liquid crystal layer 50 in the thickness direction is observed under the same conditions, and the particle diameter is measured for 1.5 times as many bead spacers as the bead spacers observed in the area of 1 mm². For example, in a case where 100 bead spacers is observed in the area of 1 mm², the particle diameter is measured for 150 bead spacers. The particle diameter of a bead spacer is a value of a distance between two straight lines between which a distance is maximum among pairs of parallel straight lines sandwiching the observed bead spacer. An average (arithmetic mean diameter) of bottom 30% of the measured particle diameters of the bead spacers is specified as the average particle diameter of the first bead spacers 60, and an average (arithmetic mean diameter) of top 30% of the measured particle diameters of the bead spacers is specified as the average particle diameter of the second bead spacers 70. In the measurement of the particle diameters of the bead spacers, even in a case where the bead spacers are aggregated, in other words, even in a case where a plurality of bead spacers form a mass, in still other words, even in a case where a plurality of bead spacers are in contact with each other, the particle diameter of each bead spacer in the aggregate, i.e., in the mass of bead spacers, is measured. In the measurement of the particle diameters of the bead spacers, the aggregate of bead spacers is not regarded as a single bead spacer.

A coefficient of variation of the particle diameters of the first bead spacers 60 and a coefficient of variation of the particle diameters of the second bead spacers 70 are small. Specifically, the coefficient of variation of the particle diameters of the first bead spacers 60 may be equal to or less than 5% or may be equal to or less than 3%. The coefficient of variation of the particle diameters of the second bead spacers 70 may be equal to or less than 7%, may be equal to or less than 5%, or may be equal to or less than 3%. The coefficient of variation of the particle diameters of the first bead spacers 60 is a value obtained by dividing standard deviation of the bottom 30% of the particle diameters of the bead spacers measured by the above method by the average (arithmetic mean diameter) of the bottom 30% of the particle diameters of the bead spacers. The coefficient of variation of the particle diameters of the second bead spacers 70 is a value obtained by dividing standard deviation of the top 30% of the particle diameters of the bead spacers measured by the above method by the average (arithmetic mean diameter) of the top 30% of the particle diameters of the bead spacers.

The first bead spacers 60 are hard so as to be able to appropriately maintain the thickness of the liquid crystal layer 50. The second bead spacers 70 are softer than the first bead spacers 60. The hardness (softness) of the first bead spacers 60 and the second bead spacers 70 is quantified by an indentation test using a hardness tester (DUH-211S manufactured by Shimadzu Corporation) compliant with ISO 14577. In the indentation test, the softness is determined to be higher as the amount of deformation becomes larger when a load is applied to a single first bead spacer 60 or a single second bead spacer 70.

The following describes specific method for measuring the softness of the first bead spacers 60 and the second bead spacers 70. First, a single first bead spacer 60 and a single second bead spacer 70 are extracted from the light modulating member 20 and are then placed on a glass plate having a thickness of 1. 0 mm to 1.2 mm under an air atmosphere at normal temperature and normal pressure. Then, a 50-µm square flat indenter is pressed against top portions of the first bead spacer 60 and the second bead spacer 70, and a load is applied up to 5 mN downward in the vertical direction at a speed of 0.29 mN/sec. After the load reaches 5mN, the load is maintained for five seconds, and then the load is removed at a speed of 0.29 mN/sec. The amount of movement of the flat indenter in the vertical direction in this process is quantitatively measured as the "amount of deformation" of the first bead spacer 60 and the second bead spacer 70. The amount of deformation of the first bead spacer 60 measured by applying a load to the first bead spacer 60 up to 5 mN at 0.29 mN/sec by using a 50-µm square flat indenter may be equal to or more than 0.1 µm or may be equal to or less than 1 µm. The amount of deformation of the second bead spacer 70 measured by applying a load to the second bead spacer 70 up to 5 mN at 0.29 mN/sec by using a 50-µm square flat indenter may be equal to or more than 2.38 µm, may be equal to or more than 2.88 µm, or may be equal to or less than 3.32.

The second bead spacers 70 may be sufficiently softer than the first bead spacers 60. In a case where the amounts of deformation of the first bead spacers 60 and the second bead spacers 70 are measured by applying a load to the first bead spacers 60 and the second bead spacers 70 up to 5 mN at 0.29 mN/sec by using a 50-µm square flat indenter, a ratio of the amount of deformation of the second bead spacers 70 to the amount of deformation of the first bead spacers 60 may be equal to or more than 2.03, may be equal to or more than 3.21, may be equal to or more than 3.89, or may be equal to or less than 4.49.

The second bead spacers 70 are speedily deformed when a load is applied at an appropriate speed. In other words, when the same load is applied to the second bead spacers 70 at an appropriate speed, deformation of the second bead spacers 70 promptly stops, and is hardly deformed while the same load is being applied. Specifically, in a case where a load is applied to the second bead spacers 70 up to 5 mN at 0.29 mN/sec by using a 50-µm square flat indenter, an amount of deformation of the second bead spacers 70 during five seconds where the load is maintained after the load reaches 5 mN may be equal to or less than 0.1 µm, may be equal to or less than 0.04 µm, or may be equal to or less than 0.03 µm.

The number of second bead spacers 70 is larger than the number of first bead spacers 60. The number of second bead spacers 70 may be larger than 100% of the number of first bead spacers 60 or may be equal to or less than 150% of the number of first bead spacers 60. Specifically, the number of second bead spacers 70 per 1 mm² in plan view of the light modulating member 20 may be equal to or more than 30 or may be equal to or less than 160. The number of first bead spacers 60 per 1 mm² in plan view of the light modulating member 20 may be equal to or more than 30 or may be equal to or less than 240. In counting the number of bead spacers, in a case where the bead spacers are aggregated, in other words, in a case where a plurality of bead spacers form a mass, in still other words, in a case where a plurality of bead spacers are in contact with each other, the aggregate or mass of bead spacers is regarded as one bead spacer.

The second bead spacers 70 may have adhesiveness. The second bead spacers 70 having adhesiveness adhere to the first member 30 and the second member.

A material of the first bead spacers 60 and a material of the second bead spacers 70 may be an inorganic material such as silica, silicone, or an acrylic resin, an organic material, or a core-shell structure combining these. A color of the first bead spacers 60 and a color of the second bead spacers 70 may be a color between a color in a state where the visible light transmittance has been lowered by the liquid crystal layer 50 and a color in a state where the visible light transmittance has been increased by the liquid crystal layer 50, may be a color closer to the color in a state where the visible light transmittance has been lowered by the liquid crystal layer 50 than the color between these colors, or may be a color darker than the color in the state where the visible light transmittance has been lowered by the liquid crystal layer 50. For example, the color of the first bead spacers 60 and the color of the second bead spacers 70 may be black.

The first bead spacers 60 and the second bead spacers 70 are held on the second member 40. The first bead spacers 60 and the second bead spacers 70 may be held on the second member 40 by being fixedly attached to the second alignment film 45 of the second member 40. The first bead spacers 60 and the second bead spacers 70 may be held on the second member 40 by an adhesive layer (not illustrated) provided in the second member 40. Movement of the first bead spacers 60 and the second bead spacers 70 between the first member 30 and the second member 40 is restricted.

Fig. 5 illustrates the light modulating member 20 in a state at normal temperature. The state at normal temperature means a state where the light modulating member 20 has been exposed to an environment of 23°C ± 5°C for 16 hours or longer. As illustrated in Fig. 5, the thickness of the liquid crystal layer 50 is maintained by both of the first bead spacers 60 and the second bead spacers 70 in the state at normal temperature. Since the second bead spacers 70 have high softness, the second bead spacers 70 are deformed in a crushed manner by being held between the first member 30 and the second member 40 in the example illustrated in Fig. 5. Both of the first bead spacers 60 and the second bead spacers 70 are in contact with both of the first member 30 and the second member 40.

When a temperature around the light modulating member 20 changes, a temperature of the light modulating member 20 can also change. For example, in a case where the light modulating member 20 is used as a sun visor of an automobile as illustrated in Fig. 1, the temperature of the light modulating member 20 also changes as an interior temperature of the automobile changes. When the temperature of the light modulating member 20 rises, the liquid crystal layer 50 expands due to heat. This changes the thickness of the liquid crystal layer 50. Fig. 6 illustrates the state where the light modulating member 20 has been heated to a high temperature. The state where the light modulating member 20 has been heated to a high temperature means a state immediately after exposure to an environment of a temperature 100°C ± 5°C for one hour or longer. In the state where the light modulating member 20 has been heated to a high temperature, the thickness of the liquid crystal layer 50 is larger than the average particle diameter of the first bead spacers 60 and is smaller than the average particle diameter of the second bead spacers 70, as illustrated in Fig. 6. The thickness of the liquid crystal layer 50 is maintained by the second bead spacers 70. The second bead spacers 70 are in contact with both of the first member 30 and the second member 40. The second bead spacers 70 may be deformed in a crushed manner by being held between the first member 30 and the second member 40. In a case where the second bead spacers 70 have adhesiveness, the second bead spacers 70 adhere to the first member 30 and the second member 40 and are therefore less likely to separate from the first member 30 and the second member 40. The first bead spacers 60 are separated from the first member 30 or the second member 40. In a case where the first bead spacers 60 are held bon the second member 40, the first bead spacers 60 are separated from the first member 30.

An example of a method for manufacturing the light modulating member 20 and the laminated plate 10 is described. The method for manufacturing the light modulating member 20 includes a step of producing a first member and a second member, a step of applying a seal material to the second member, a step of forming a liquid crystal layer, a step of superimposing the first member and the second member, and a step of cutting a part of the first member and a part of the second member. The method for manufacturing the laminated plate 10 includes a step of joining the first substrate 11 and the second substrate 12 to the light modulating member 20.

The first member 30 and the second member 40 are produced. A step of producing the second member 40 is described. The second electrode 43 is formed on the second base member 41 by sputtering or the like. A coating liquid produced by dispersing the first bead spacers 60 and the second bead spacers 70 in a solvent is partially applied onto the second electrode 43 together with a resin component that will form the second alignment film 45. By sequentially performing drying and firing processes on the resin component, the resin component is solidified. The first bead spacers 60 and the second bead spacers 70 are held by being fixedly attached to the resin component. By imparting an alignment regulating force to the solidified resin component by rubbing, photo-alignment, or the like, the second alignment film 45 is formed. The second alignment film 45 may be formed without rubbing. A part of an outer circumference of each of the first bead spacers 60 and the second bead spacers 70 may be covered with the second alignment film 45. The first bead spacers 60 and the second bead spacers 70 may be bonded to the second alignment film 45 by an adhesive or the like. Through the above steps, the second member 40 such as the one illustrated in Fig. 7 is produced. The second member 40 holds the first bead spacers 60 and the second bead spacers 70 by the second alignment film 45. The first member 30 is produced through steps similar to the steps for producing the second member 40 except for that the first bead spacers 60 and the second bead spacers 70 are dispersed in a coating liquid.

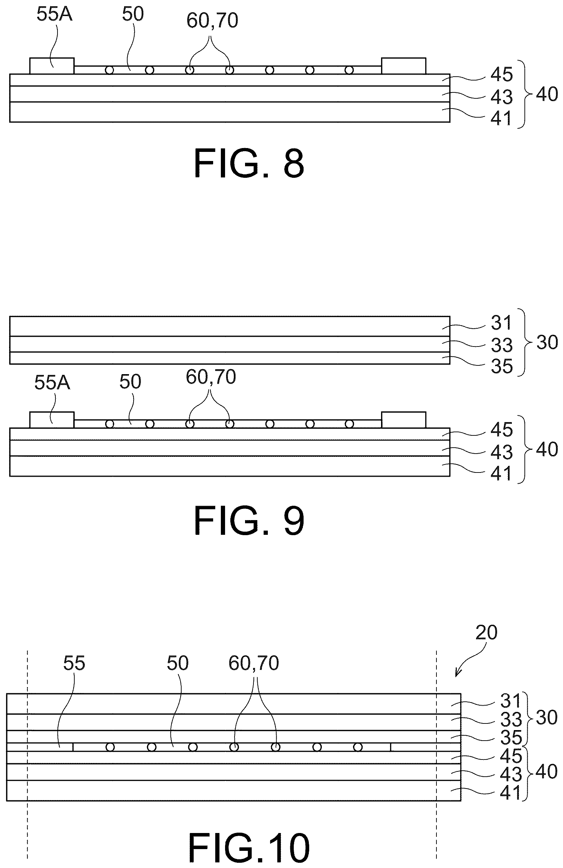

A seal material 55A is printed in a surrounding pattern on a surface of the second member 40 on which the second alignment film 45 is provided. The seal material 55A is a viscous liquid material having adhesiveness or tackiness. The seal material 55A is cured to form the seal member 55. The seal material 55A is, for example, cured by being exposed to ultraviolet light. As illustrated in Fig. 8, the liquid crystal layer 50 is formed by supplying a liquid crystal material containing liquid crystal molecules to a portion surrounded by the seal material 55A.

As illustrated in Fig. 9, under reduced pressure, the first member 30 is superimposed onto a surface of the second member 40 onto which the seal material 55A has been applied. When the first member 30 is superimposed onto the second member 40, a pressing and smoothing operation may be performed by using a roller or the like. The seal material 55A is deformed and cured to become the seal member 55. The first member 30 and the second member 40 are joined by the seal member 55.

A part of the first member 30 and a part of the second member 40 are cut along the dotted lines illustrated in Fig. 10. Outer peripheral portions of the first member 30 and the second member 40 are removed. The first member 30 and the second member 40 may be cut at least partially on the seal member 55. An outer peripheral portion of the seal member 55 may also be removed. The first member 30 and the second member 40 may be cut by using a tool such as a punching blade or a cutter or by using a laser cutting device. Through the above steps, the light modulating member 20 is produced.

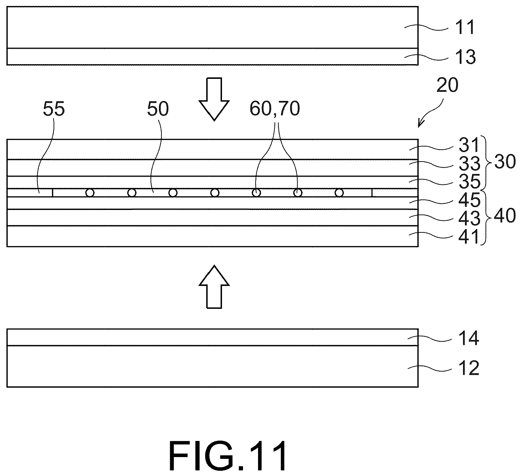

As illustrated in Fig. 11, the first joining layer 13 and the first substrate 11 are laminated on one surface of the light modulating member 20. The first substrate 11 and the light modulating member 20 are joined with the first joining layer 13 interposed therebetween. The second joining layer 14 and the second substrate 12 are laminated on the other surface of the light modulating member 20. The second substrate 12 and the light modulating member 20 are joined with the second joining layer 14 interposed therebetween. Through the above steps, the laminated plate 10 illustrated in Fig. 4 is produced.

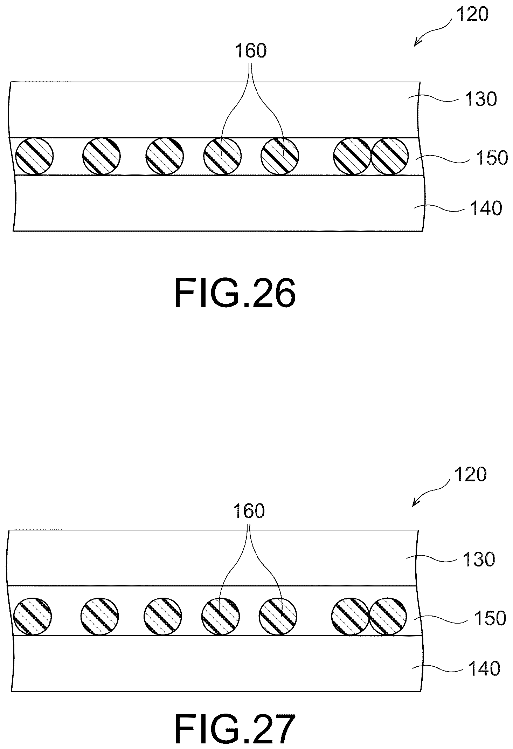

Fig. 26 is an enlarged cross-sectional view of a portion between a first member 130 and a second member 140 of a conventional light modulating member 120 in a state at normal temperature. The first member 130 and the second member 140 sandwich a liquid crystal layer 150. A thickness of the liquid crystal layer 150 is maintained by bead spacers 160. The bead spacers 160 are held by the second member 140.

A light modulating member is sometimes exposed to a high temperature for long period. For example, in a case where the light modulating member is installed inside an interior of an automobile, the light modulating member is exposed to a high temperature for a long period since a temperature inside the interior of the automobile rises due to sunlight or the like. When the temperature of the light modulating member rises, a liquid crystal layer expands due to heat. Fig. 27 is an enlarged cross-sectional view of the portion between the first member 130 and the second member 140 of the conventional light modulating member 120 that has been heated to a high temperature. As illustrated in Fig. 27, in the conventional light modulating member 120, when the liquid crystal layer 150 expands, a gap between the bead spacers 160 and the first member 130 expands, and liquid crystal molecules can move between the bead spacers 160 and the first member 130. In the conventional light modulating member, in a case where the light modulating member 120 is placed obliquely with respect to the horizontal direction, the liquid crystal molecules can move in the liquid crystal layer 150 due to gravity, and the liquid crystal molecules can shift downward in the vertical direction. The liquid crystal molecules thus concentrated appears conspicuous from an outside of the light modulating member 120. This can degrade outer appearance of the light modulating member 120.

The light modulating member 20 according to the embodiment includes the plurality of first bead spacers 60 and the plurality of second bead spacers 70. The average particle diameter of the second bead spacers 70 is larger than the average particle diameter of the first bead spacers 60. The second bead spacers 70 are softer than the first bead spacers 60. In the state at normal temperature, the second bead spacers 70 are deformed in a crushed manner due to the softness by being held by the first member 30 and the second member 40. The first bead spacers 60 suppress occurrence of a situation where the second bead spacers 70 are crushed too much and the thickness of the liquid crystal layer 50 cannot be maintained. The first bead spacers 60 maintain the thickness of the liquid crystal layer 50 so that the thickness of the liquid crystal layer 50 does not become smaller than the average particle diameter of the first bead spacers 60. In the state at normal temperature, the thickness of the liquid crystal layer 50 is maintained by both of the first bead spacers 60 and the second bead spacers 70. In the state where the light modulating member 20 has been heated to a high temperature, the thickness of the liquid crystal layer 50 increases. Although the first bead spacers 60 are separated from the first member 30 or the second member 40, the second bead spacers 70 are kept in contact with both of the first member 30 and the second member 40 since the second bead spacers 70 crushed in accordance with the thickness of the liquid crystal layer 50 return to the original shape. In the liquid crystal layer 50 between the second bead spacers 70 and the first member 30 and between the second bead spacers 70 and the second member 40, movement of the liquid crystal molecules is suppressed. Degradation of the outer appearance of the light modulating member 20 caused by uneven distribution of the liquid crystal molecules can be suppressed.

In a case where amounts of deformation of the first bead spacers 60 and the second bead spacers 70 are measured by applying a load to the first bead spacers 60 and the second bead spacers 70 up to 5 mN at 0.29 mN/sec by using a 50-µm square flat indenter, a ratio of the amount of deformation of the second bead spacers 70 to the amount of deformation of the first bead spacers 60 is equal to or more than 3.21 and equal to or less than 4.49. The second bead spacers 70 are sufficiently softer than the first bead spacers 60. The first bead spacers 60 suppress occurrence of a situation where the second bead spacers 70 are crushed too much and the thickness of the liquid crystal layer 50 cannot be maintained. The first bead spacers 60 maintain the thickness of the liquid crystal layer 50 so that the thickness of the liquid crystal layer 50 does not become smaller than the average particle diameter of the first bead spacers 60. The second bead spacers 70 are appropriately deformed in the state at normal temperature, and the second bead spacers 70 crushed in accordance with the thickness of the liquid crystal layer 50 return to the original shape in the state where the light modulating member 20 has been heated to a high temperature. The second bead spacers 70 are kept in contact with both of the first member 30 and the second member 40. In the liquid crystal layer 50 between the second bead spacers 70 and the first member 30 and between the second bead spacers 70 and the second member 40, movement of the liquid crystal molecules is suppressed. Degradation of the outer appearance of the light modulating member 20 caused by uneven distribution of the liquid crystal molecules can be suppressed.

The amount of deformation of the second bead spacers 70 measured by applying a load to the second bead spacers 70 up to 5 mN at 0.29 mN/sec by using a 50-µm square flat indenter is equal to or more than 2.38 µm and equal to or less than 3.32 µm. Since the second bead spacers 70 are sufficiently soft, the second bead spacers 70 are appropriately deformed in the state at normal temperature. In the state at normal temperature, the thickness of the liquid crystal layer 50 can be appropriately maintained. Since the second bead spacers 70 are not too soft, the second bead spacers 70 deformed in accordance with the thickness of the liquid crystal layer 50 can appropriately return to the original shape in the state where the light modulating member 20 has been heated to a high temperature. The second bead spacers 70 are kept in contact with both of the first member 30 and the second member 40. In the liquid crystal layer 50 between the second bead spacers 70 and the first member 30 and between the second bead spacers 70 and the second member 40, movement of the liquid crystal molecules is suppressed. Degradation of the outer appearance of the light modulating member 20 caused by uneven distribution of the liquid crystal molecules can be suppressed.

In a case where a load is applied to the second bead spacers 70 up to 5 mN at 0.29 mN/sec by using a 50-µm square flat indenter, the amount by which the second bead spacers 70 are deformed during five seconds where the load is maintained after the load reaches 5 mN is equal to or less than 0.04 µm. The second bead spacers 70 are speedily deformed when a load is applied at an appropriate speed. The second bead spacers 70 are speedily deformed when the second bead spacers 70 are held between the first member 30 and the second member 40. The first bead spacers 60 are less likely to separate from the first member 30 and the second member 40. The thickness of the liquid crystal layer 50 can be appropriately maintained by the first bead spacer 60. In the state at normal temperature, movement of the liquid crystal molecules is suppressed by the first bead spacers 60. Degradation of the outer appearance of the light modulating member 20 caused by uneven distribution of the liquid crystal molecules can be suppressed.

The average particle diameter of the second bead spacers 70 is equal to or more than 110% and equal to or less than 130% of the average particle diameter of the first bead spacers 60. When the temperature changes from 23°C to 100°C, the thickness of the liquid crystal layer 50 increases by approximately 6% due to thermal expansion. In the state where the light modulating member 20 has been heated to a high temperature, the liquid crystal layer 50 expands, and thus the first bead spacers 60 are separated from the first member 30 or the second member 40, but the second bead spacers 70 are likely to be kept in contact with both of the first member 30 and the second member 40 since the average particle diameter of the second bead spacers 70 is within an appropriate range relative to the average particle diameter of the first bead spacers. In the state where the light modulating member 20 has been heated to a high temperature, movement of the liquid crystal molecules in the liquid crystal layer 50 is suppressed by the second bead spacers 70. Degradation of the outer appearance of the light modulating member 20 caused by uneven distribution of the liquid crystal molecules can be suppressed.

The number of second bead spacers 70 is larger than the number of first bead spacers 60. The second bead spacers 70 are likely to be present between the first bead spacers 60. In the state where the light modulating member 20 has been heated to a high temperature, the first bead spacers 60 are separated from the first member 30 or the second member 40, but the second bead spacers 70 are in contact with both of the first member 30 and the second member 40. Between the first bead spacers 60, the thickness of the liquid crystal layer 50 can be maintained by the second bead spacers 70. In the state where the light modulating member 20 has been heated to a high temperature, movement of the liquid crystal molecules in the liquid crystal layer 50 is suppressed by the second bead spacers 70. Degradation of the outer appearance of the light modulating member 20 caused by uneven distribution of the liquid crystal molecules can be suppressed.

The second bead spacers 70 have adhesiveness. The second bead spacers 70 more firmly adhere to the first member 30 and the second member. Since the second bead spacers 70 have high softness, the second bead spacers 70 are deformed in a crushed manner by being held between the first member 30 and the second member 40, and thus the second bead spacers 70 make contact with the first member 30 and the second member 40 in a large area. The second bead spacers 70 more firmly adhere to the first member 30 and the second member. The second bead spacers 70 are less likely to separate from the first member 30 and the second member 40. Movement of the liquid crystal molecules in the liquid crystal layer 50 is suppressed. Degradation of the outer appearance of the light modulating member 20 caused by uneven distribution of the liquid crystal molecules can be suppressed.

The color of the first bead spacers 60 and the color of the second bead spacers 70 are black. This can suppress occurrence of a situation where the transmittance is made high by the first bead spacers 60 and the second bead spacers 70 in a case where the visible light transmittance of the light modulating member 20 is adjusted to a low level. The first bead spacers 60 and the second bead spacers 70 are inconspicuous in a case where the visible light transmittance of the light modulating member 20 is adjusted to a high level. Outer appearance of the light modulating member is less likely to be degraded by the first bead spacers 60 and the second bead spacers 70.

The light modulating member 20 according to the embodiment includes the first member 30 including the first base member 31, the second member 40 including the second base member 41 opposed to the first base member 31, the liquid crystal layer 50 located between the first member 30 and the second member 40, and the plurality of first bead spacers 60 and the plurality of second bead spacers 70 located between the first member 30 and the second member 40 so as to maintain the thickness of the liquid crystal layer 50. The average particle diameter of the second bead spacers 70 is larger than the average particle diameter of the first bead spacers 60. The second bead spacers 70 are softer than the first bead spacers 60. According to the light modulating member 20 according to the embodiment, the second bead spacers 70 are deformed in a crushed manner due to the softness by being held between the first member 30 and the second member 40. In the state where the light modulating member 20 has been heated to a high temperature, even in a case where the thickness of the liquid crystal layer 50 increases, the second bead spacers 70 crushed in accordance with the thickness of the liquid crystal layer 50 return to the original shape and are therefore kept in contact with both of the first member 30 and the second member 40. In the liquid crystal layer 50 between the second bead spacers 70 and the first member 30 and between the second bead spacers 70 and the second member 40, movement of the liquid crystal molecules is suppressed. Degradation of the outer appearance of the light modulating member 20 caused by uneven distribution of the liquid crystal molecules can be suppressed.

Although the embodiment has been described above, the embodiment does not limit the present disclosure. The above embodiment may be implemented in other forms, and various omissions, substitutions, changes, additions, and the like may be made without departing from the gist of the present disclosure.

### EXAMPLES

The embodiment of the present disclosure is described in more detail by using Examples. The present disclosure is not limited to Examples.

A plurality of light modulating members each including a first member, a second member, a liquid crystal layer, first bead spacers, and second bead spacers were prepared as samples according to Examples and Comparative Examples. The samples were different in type of second bead spacers but were similar in other configurations. The first member was designed to include a first base member made of polyethylene terephthalate and having a thickness of 125 µm. The second member was designed to include a second base member made of polyethylene terephthalate and having a thickness of 125 µm. The thickness of the liquid crystal layer was 12 µm in a state where the liquid crystal layer was exposed to an environment of a temperature 23°C ± 5°C for 16 hours or longer. An average particle diameter of the first bead spacers was set to 12 µm. The number of first bead spacers was 40 per 1 mm² in plan view of the light modulating member was 40.

In Sample 1, the second bead spacers were identical to the first bead spacers. In Samples 2 to 7, an average particle diameter of the second bead spacers was set to 14 µm. In each sample, the number of second bead spacers per 1 mm² in plan view of the light modulating member was 50. The samples were different in physical properties of the second bead spacers. Specifically, the samples were different in amount of deformation under applied load and amount of change during application of an identical load, which will be described later.

The light modulating member samples were placed obliquely with respect to the horizontal direction immediately after exposure to an environment of a temperature 23°C ± 5°C for one hour or longer, and it was visually confirmed whether liquid crystal molecules were unevenly distributed. A portion where the liquid crystal molecules are unevenly distributed is discolored and is therefore visually observed from the outside. Samples in which uneven distribution of the liquid crystal molecules was not observed were rated as A, those in which uneven distribution of the liquid crystal molecules was observed only to a slight extent were rated as B, and those in which noticeable uneven distribution of the liquid crystal molecules was observed were rated as C.

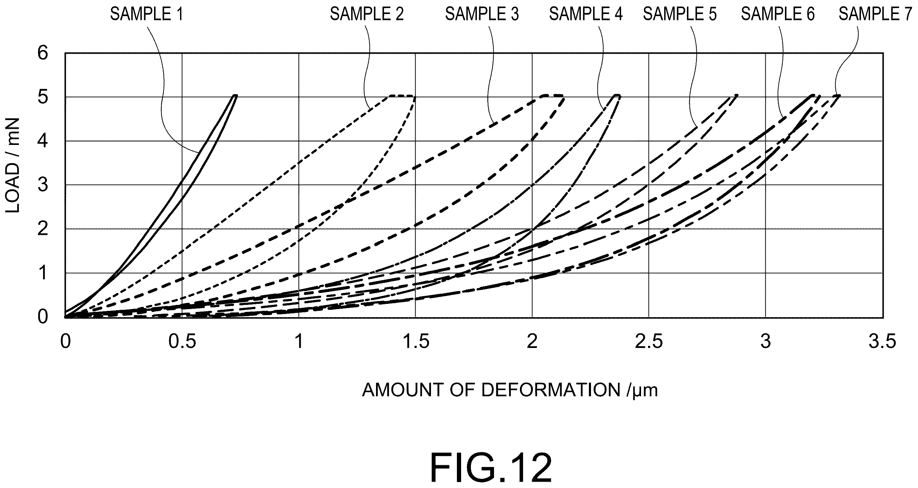

The first bead spacers and the second bead spacers were extracted from each of the light modulating member samples. Hardness (softness) of the first bead spacers and the second bead spacers of the samples was quantified and specified by an indentation test using a hardness tester (DUH-211S manufactured by Shimadzu Corporation) compliant with ISO 14577. Specifically, a load was applied to one first bead spacer or one second bead spacer up to 5 mN at 0.29 mN/sec by using a 50-µm square flat indenter, the load was maintained for five seconds after the load reached 5 mN, and then the load was removed. The amount of deformation of the first bead spacer or the second bead spacer under the applied load during application of the load was measured. Fig. 12 illustrates results of measurement of the second bead spacers of the samples. Measurement of the first bead spacers is identical to that of Sample 1.

For each of the samples, the amount of deformation of the second bead spacer under the applied load, a ratio of the amount of deformation of the second bead spacer to the amount of deformation of the first bead spacer (Sample 1) under the applied load, and the amount of deformation of the second bead spacer during five seconds where the load was maintained after the load reached 5 mN were specified. The results including a result of confirmation as to whether liquid crystal molecules were unevenly distributed are shown in Table 1 below.

**[Table 1]**

| | Amount of deformation of second bead spacers | Ratio of amount of deformation of second bead spacers to amount of deformation of first bead spacers | Amount of deformation of second bead spacers during five seconds where load is maintained | Uneven distribution of liquid crystal molecules |
|---|---|---|---|---|
| Sample 1 | 0.74µm | 1 | 0.02µm | C |
| Sample 2 | 1.50µm | 2.03 | 0.11µm | C |
| Sample 3 | 2.14µm | 2.89 | 0.11µm | C |
| Sample 4 | 2.38µm | 3.22 | 0.03µm | B |
| Sample 5 | 2.88µm | 3.89 | 0.03µm | A |
| Sample 6 | 3.23µm | 4.36 | 0.04µm | A |
| Sample 7 | 3.32µm | 4.49 | 0.03µm | A |

The following is understood from the results shown in Table 1.

In a case where the ratio of the amount of deformation of the second bead spacer to the amount of deformation of the first bead spacer is equal to or more than 3.21 and equal to or less than 4.49, the liquid crystal molecules are less likely to be unevenly distributed, and in a case where the ratio of the amount of deformation of the second bead spacer to the amount of deformation of the first bead spacer is equal to or more than 3.89 and equal to or less than 4.49, the liquid crystal molecules are even less likely to be unevenly distributed. This is considered to be because in the state where the light modulating member has been heated to a high temperature, the second bead spacers crushed in accordance with the thickness of the liquid crystal layer return to the original shape and thus movement of liquid crystal molecules between the second bead spacers and the first member is suppressed.

In a case where the amount of deformation of the second bead spacers 70 is equal to or more than 2.38 µm and equal to or less than 3.32 µm, the liquid crystal molecules are less likely to be unevenly distributed, and in a case where the amount of deformation of the second bead spacers 70 is equal to or more than 2.88 µm and equal to or less than 3.32 µm, the liquid crystal molecules are even less likely to be unevenly distributed. This is considered to be because in the state where the light modulating member has been heated to a high temperature, the second bead spacers crushed in accordance with the thickness of the liquid crystal layer return to the original shape and thus movement of liquid crystal molecules between the second bead spacers and the first member is suppressed.

In a case where the second bead spacers are sufficiently soft and the amount of deformation of the second bead spacers 70 during five seconds where the load was maintained after the load reached 5 mN is equal to or less than 0.04 µm, the liquid crystal molecules are less likely to be unevenly distributed. This is considered to be because the second bead spacers are speedily deformed and thus the first bead spacers and the first member are less likely to be separated and movement of liquid crystal molecules is suppressed in the state at normal temperature.

### (Modifications)

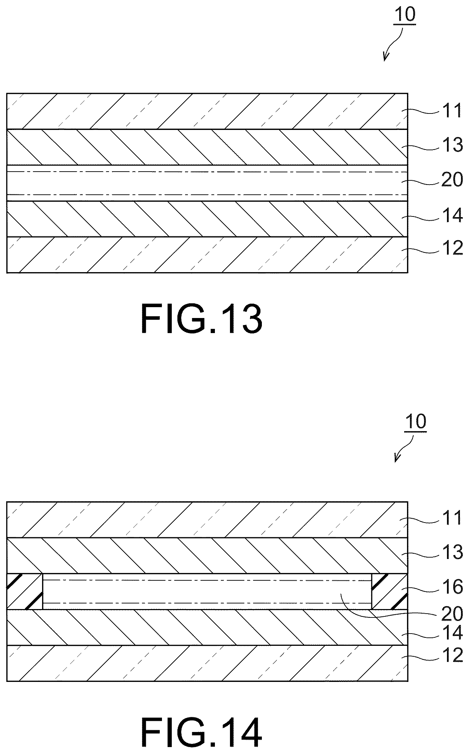

Next, various modifications of the present embodiment are described with reference to Figs. 13 to 25. Figs. 13 to 25 each illustrate a laminated plate according to a modification of the present embodiment. In Figs. 13 to 25, parts identical to those in Figs. 1 to 12 are given identical reference signs, and detailed description thereof is omitted.

### (First Modification)

Fig. 13 illustrates a laminated plate 10 according to a first modification. As illustrated in Fig. 13, the laminated plate 10 according to the present modification includes the first substrate 11, the first joining layer 13, the light modulating member 20, the second joining layer 14, and the second substrate 12. The first substrate 11, the first joining layer 13, the light modulating member 20, the second joining layer 14, and the second substrate 12 are laminated in this order.

The first joining layer 13 is a member that is located between the first substrate 11 and the light modulating member 20 and joins the first substrate 11 and the light modulating member 20 to each other. Similarly, the second joining layer 14 is a member that is located between the second substrate 12 and the light modulating member 20 and joins the second substrate 12 and the light modulating member 20 to each other.

In Fig. 13, planar shapes of the first joining layer 13, the light modulating member 20, and the second joining layer 14 are identical. Furthermore, planar shapes of the first substrate 11, the first joining layer 13, the light modulating member 20, the second joining layer 14, and the second substrate 12 may be identical. A thickness of the first joining layer 13 is preferably uniform within a plane. Furthermore, a thickness of the second joining layer 14 is preferably uniform within a plane.

In the present modification, at least one of the first joining layer 13 and the second joining layer 14 is a joint body containing a non-pressure-sensitive adhesive component. Both of the first joining layer 13 and the second joining layer 14 may be a joint body containing a non-pressure-sensitive adhesive component. The "joint body containing a non-pressure-sensitive adhesive component" refers to a joint body that does not require pressure to appropriately adhere to an adjacent object, and that is capable of moderately adhering to the adjacent object under normal pressure. Examples of the "joint body containing a non-pressure-sensitive adhesive component" include optically transparent resins such as an Optical Clear Adhesive (OCA) and an Optical Clear Resin (OCR), and cured resins (e.g., thermosetting resins, room-temperature curable resins, two-component resins, ultraviolet-curable resins, and electron-beam-curable resins).

In the present modification, one of the first joining layer 13 and the second joining layer 14 may be made of an OCR, and the other one of the first joining layer 13 and the second joining layer 14 may be made of an OCA. The OCR is obtained by applying, onto an object, a liquid resin prepared by mixing a base resin such as an acrylic resin, a silicone resin, or a urethane resin with an additive, and then curing the resin by using, for example, ultraviolet (UV) light. The OCA is, for example, a layer produced as follows. First, a liquid curable adhesive layer composition containing a polymerizable compound is applied onto a release film such as polyethylene terephthalate (PET), and the composition is then cured by using, for example, ultraviolet (UV) light to obtain an OCA sheet. The curable adhesive layer composition may be an optical adhesive such as an acrylic resin, a silicone resin, or a urethane resin. By peeling off the release film after the OCA sheet is pasted onto the object, a layer made of the OCA is obtained. The first joining layer 13 and the second joining layer 14 made of the OCA preferably each have optical transparency and have heat resistance up to about at least 120°C, moisture and heat resistance, and weather resistance.

In Fig. 13, one of the first joining layer 13 and the second joining layer 14 may be made of an OCR, and the other one of the first joining layer 13 and the second joining layer 14 may be made of an OCA. Alternatively, both of the first joining layer 13 and the second joining layer 14 may be made of an OCR. Alternatively, both of the first joining layer 13 and the second joining layer 14 may be made of an OCA. Alternatively, one of the first joining layer 13 and the second joining layer 14 may be made of an OCR, and the other one of the first joining layer 13 and the second joining layer 14 may be made of a joint body containing a pressure-sensitive adhesive component. Examples of the joint body containing a pressure-sensitive adhesive component include resins such as polyvinyl butyral (PVB). Note that the "joint body containing a pressure-sensitive adhesive component" refers to a joint body that requires pressure (i.e., pressure higher than a normal pressure) to appropriately adhere to an adjacent object. The normal pressure is an environmental pressure and is normally equal to an atmospheric pressure, and can be a standard atmospheric pressure.

According to the present modification, the planar shapes of the first joining layer 13, the light modulating member 20, and the second joining layer 14 are identical. This suppresses occurrence of a situation where thermal expansion of the first joining layer 13 and the second joining layer 14 becomes nonuniform within a plane when the laminated plate 10 is heated to a high temperature during use. As a result, uneven distribution of the liquid crystal molecules in the liquid crystal layer 50 of the light modulating member 20 caused by nonuniform thermal expansion of the first joining layer 13 and the second joining layer 14 within a plane can be suppressed, and degradation of the outer appearance of the laminated plate 10 can be suppressed.

### (Second Modification)

Fig. 14 illustrates a laminated plate 10 according to a second modification. In the laminated plate 10 illustrated in Fig. 14, the first joining layer 13 and the second joining layer 14 are connected to each other by an insertion member 16. The insertion member 16 is a frame-shaped member in plan view, more specifically, a member having a rectangular frame shape (a rectangular shape with a hollow center) or a shape obtained by cutting a part of the rectangular frame shape. The insertion member 16 may be made of a material having a coefficient of thermal expansion close to a coefficient of thermal expansion of the light modulating member 20. A difference between the coefficient of thermal expansion of the insertion member 16 and the coefficient of thermal expansion of the light modulating member 20 may be equal to or less than 3 × 10⁻⁴, desirably equal to or less than 1.5 × 10⁻⁴, more desirably equal to or less than 5 × 10⁻⁵, further more desirably equal to or less than 1 × 10⁻⁵. A material of the insertion member 16 may be, for example, a resin such as polyethylene terephthalate (PET), polycarbonate (PC), or an OCR. A thickness of the insertion member 16 is preferably identical to the thickness of the light modulating member 20.

The insertion member 16 is a member provided in a thickness portion of the light modulating member 20 in cross-sectional view in a case where the first joining layer 13 and the second joining layer 14 are larger than the light modulating member 20 in plan view. The insertion member 16 is provided so as to surround the light modulating member 20 in plan view. The insertion member 16 has a shape obtained by cutting out the planar shape of the light modulating member 20 from the planar shape of the first joining layer 13 and the second joining layer 14.

An outer periphery of the insertion member 16 may have a size identical to outer peripheries of the first substrate 11 and the second substrate 12. Alternatively, the outer periphery of the insertion member 16 may be larger than the outer peripheries of the first substrate 11 and the second substrate 12 or may be smaller than the outer peripheries of the first substrate 11 and the second substrate 12. An inner periphery of the insertion member 16 may have a size identical to the outer periphery of the light modulating member 20 or may be larger than the outer periphery of the light modulating member 20.

The thickness of the first joining layer 13 is preferably uniform both in a portion thereof that is in contact with the light modulating member 20 and a portion thereof that is not in contact with the light modulating member 20 (a portion thereof that is in contact with the insertion member 16). The thickness of the first joining layer 13 is more preferably uniform within a plane. Similarly, the thickness of the second joining layer 14 is preferably uniform both in a portion thereof that is in contact with the light modulating member 20 and a portion thereof that is not in contact with the light modulating member 20 (a portion thereof that is in contact with the insertion member 16). The thickness of the second joining layer 14 is more preferably uniform within a plane.

In Fig. 14, one of the first joining layer 13 and the second joining layer 14 may be made of an OCR, and the other one of the first joining layer 13 and the second joining layer 14 may be made of an OCA. Alternatively, both of the first joining layer 13 and the second joining layer 14 may be made of an OCR. Alternatively, both of the first joining layer 13 and the second joining layer 14 may be made of an OCA. Alternatively, one of the first joining layer 13 and the second joining layer 14 may be made of an OCR, and the other one of the first joining layer 13 and the second joining layer 14 may be made of a joint body containing a pressure-sensitive adhesive component. Examples of the joint body containing a pressure-sensitive adhesive component include resins such as polyvinyl butyral (PVB).

According to the present modification, the insertion member 16 is provided around the outer periphery of the light modulating member 20. This suppresses occurrence of a situation where an interval between the first substrate 11 and the second substrate 12 becomes nonuniform within a plane due to a difference in thermal expansion between the light modulating member 20 and a member located around the light modulating member 20 when the laminated plate 10 is heated to a high temperature during use. In other words, a region located outside the light modulating member 20 and a region where the light modulating member 20 is present uniformly thermally expand. This can suppress uneven distribution of the liquid crystal molecules in the liquid crystal layer 50 of the light modulating member 20 caused by nonuniformity in interval between the first substrate 11 and the second substrate 12, thereby suppressing degradation of the outer appearance of the laminated plate 10. Furthermore, according to the present modification, entry of moisture or the like from a side surface of the laminated plate 10 is suppressed, and waterproofness of the laminated plate 10 can be further increased. Furthermore, according to the present modification, the first substrate 11 (the first joining layer 13) and the second substrate 12 (the second joining layer 14) can be substantially held not by the light modulating member 20 but by the insertion member 16. This can suppress peeling of the seal member 55 that constitutes the light modulating member 20, that is, can suppress peeling of the first member 30 and the second member 40, thereby suppressing peeling of the first substrate 11 (the first joining layer 13) and the second substrate (the second joining layer 14).

### (Third Modification)

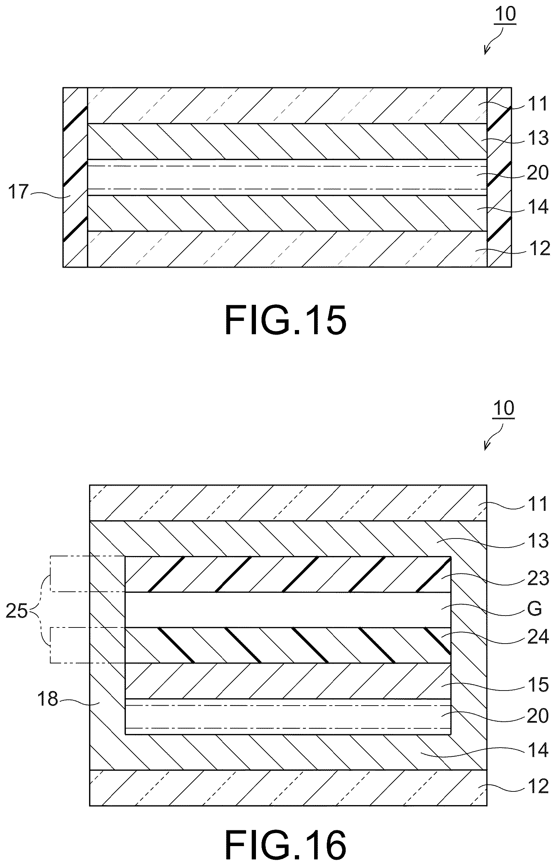

Fig. 15 illustrates a laminated plate 10 according to a third modification. In the laminated plate 10 illustrated in Fig. 15, an outer periphery fixation member 17 is provided along the outer peripheries of the first substrate 11, the first joining layer 13, the light modulating member 20, the second joining layer 14, and the second substrate 12. The outer periphery fixation member 17 may be, for example, made of a sealing material, a resin, or a metal. Examples of the sealing material include thermosetting resins such as epoxy resins and acrylic resins, and ultraviolet-curable resins.

The outer periphery fixation member 17 is a frame-shaped member in plan view, more specifically, a member having a rectangular frame shape (a rectangular shape with a hollow center) or a shape obtained by cutting a part of the rectangular frame shape. The outer periphery fixation member 17 is provided in thickness portions of the first substrate 11, the first joining layer 13, the light modulating member 20, the second joining layer 14, and the second substrate 12 in cross-sectional view. The outer periphery fixation member 17 is provided so as to surround the first substrate 11, the first joining layer 13, the light modulating member 20, the second joining layer 14, and the second substrate 12 in plan view. An inner periphery of the outer periphery fixation member 17 may have a size identical to the outer peripheries of the first substrate 11, the first joining layer 13, the light modulating member 20, the second joining layer 14, and the second substrate 12. A thickness of the outer periphery fixation member 17 may be identical to a total thickness of the first substrate 11, the first joining layer 13, the light modulating member 20, the second joining layer 14, and the second substrate 12.

In Fig. 15, one of the first joining layer 13 and the second joining layer 14 may be made of an OCR, and the other one of the first joining layer 13 and the second joining layer 14 may be made of an OCA. Alternatively, both of the first joining layer 13 and the second joining layer 14 may be made of an OCR. Alternatively, both of the first joining layer 13 and the second joining layer 14 may be made of an OCA. Alternatively, one of the first joining layer 13 and the second joining layer 14 may be made of an OCR, and the other one of the first joining layer 13 and the second joining layer 14 may be made of a joint body containing a pressure-sensitive adhesive component. Examples of the joint body containing a pressure-sensitive adhesive component include resins such as polyvinyl butyral (PVB).

According to this modification, the outer periphery fixation member 17 is provided along the outer peripheries of the first substrate 11, the first joining layer 13, the light modulating member 20, the second joining layer 14, and the second substrate 12. In this case, planar shapes of the first joining layer 13, the light modulating member 20, and the second joining layer 14 are identical. This suppresses occurrence of a situation where the interval between the first substrate 11 and the second substrate 12 becomes nonuniform within a plane when the laminated plate 10 is heated to a high temperature during use. As a result, uneven distribution of the liquid crystal molecules in the liquid crystal layer 50 of the light modulating member 20 caused by nonuniformity in interval between the first substrate 11 and the second substrate 12 can be suppressed, and degradation of the outer appearance of the laminated plate 10 can be suppressed. Furthermore, according to the present modification, entry of moisture or the like from a side surface of the laminated plate 10 can be suppressed, and waterproofness of the laminated plate 10 can be further increased. Furthermore, according to the present modification, the first substrate 11 (the first joining layer 13) and the second substrate 12 (the second joining layer 14) can be substantially held not by the light modulating member 20 but by the outer periphery fixation member 17. This can suppress peeling of the first substrate 11 (the first joining layer 13) or the second substrate 12 (the second joining layer 14) from the light modulating member 20.

### (Fourth Modification)

Fig. 16 illustrates a laminated plate 10 according to a fourth modification. The laminated plate 10 illustrated in Fig. 16 includes the first substrate 11, the first joining layer 13, a first reflection prevention layer 23, a second reflection prevention layer 24, a third joining layer 15, the light modulating member 20, the second joining layer 14, and the second substrate 12. The first substrate 11, the first joining layer 13, the first reflection prevention layer 23, the second reflection prevention layer 24, the third joining layer 15, the light modulating member 20, the second joining layer 14, and the second substrate 12 are laminated in this order. A gap layer G is provided between the first joining layer 13 and the light modulating member 20, more specifically, between the first reflection prevention layer 23 and the second reflection prevention layer 24. The first joining layer 13 and the second joining layer 14 are connected to each other by an outer periphery joining layer 18.

The first joining layer 13 and the second joining layer 14 may be made of a joint body containing a pressure-sensitive adhesive component. Examples of the joint body containing a pressure-sensitive adhesive component include resins such as polyvinyl butyral (PVB). The third joining layer 15 joins the second reflection prevention layer 24 and the light modulating member 20 to each other. A planar shape of the third joining layer 15 may be identical to the planar shape of the light modulating member 20. The third joining layer 15 is made of a joint body containing a non-pressure-sensitive adhesive component such as an OCA or an OCR. The third joining layer 15 is not limited to this, and may be made of a joint body containing a pressure-sensitive adhesive component. The third joining layer 15 may be made of a material identical to that of the first joining layer 13 and the second joining layer 14. In this case, the outer periphery joining layer 18 may be integral with the first joining layer 13 and the second joining layer 14.

The outer periphery joining layer 18 is a frame-shaped member in plan view, more specifically, a member having a rectangular frame shape (a rectangular shape with a hollow center) or a shape obtained by cutting a part of the rectangular frame shape. The outer periphery joining layer 18 is provided in thickness portions of the first reflection prevention layer 23, the gap layer G, the second reflection prevention layer 24, the light modulating member 20, the third joining layer 15, and the light modulating member 20 in cross-sectional view. The outer periphery joining layer 18 is provided so as to surround the first reflection prevention layer 23, the gap layer G, the second reflection prevention layer 24, the light modulating member 20, the third joining layer 15, and the light modulating member 20 in plan view. An inner periphery of the outer periphery joining layer 18 may have a size identical to the outer peripheries of the first reflection prevention layer 23, the gap layer G, the second reflection prevention layer 24, the light modulating member 20, the third joining layer 15, and the light modulating member 20. The outer periphery joining layer 18, the first joining layer 13, and the second joining layer 14 may be made of an identical material. The outer periphery joining layer 18 may be made of a joint body containing a pressure-sensitive adhesive component such as a resin such as polyvinyl butyral (PVB).

The first reflection prevention layer 23 and the second reflection prevention layer 24 are each provided so as to face the gap layer G. Planar shapes of the first reflection prevention layer 23 and the second reflection prevention layer 24 are smaller than the planar shapes of the first joining layer 13 and the second joining layer 14. The planar shapes of the first reflection prevention layer 23 and the second reflection prevention layer 24 may be identical to the planar shape of the light modulating member 20.

The gap layer G is provided in a space between the first reflection prevention layer 23 and the second reflection prevention layer 24. That is, the first reflection prevention layer 23 and the second reflection prevention layer 24 are provided with a constant interval interposed therebetween in the thickness direction without being joined to each other. The gap layer G is filled with air but is not limited to this, and may be filled with a gas such as nitrogen or an inert gas. A thickness of the gap layer G is, for example, larger than 0 µm and is equal to or less than 10000 µm, preferably equal to or more than 0.1 µm and equal to or less than 100 µm. A planar shape of the gap layer G may be substantially identical to the planar shapes of the first reflection prevention layer 23 and the second reflection prevention layer 24.

For example, an Anti Reflection (AR) film may be used as the first reflection prevention layer 23 and/or the second reflection prevention layer 24. The AR film is a film that suppresses specular reflection by utilizing interference of reflected light. Examples of a structure of the first reflection prevention layer 23 and the second reflection prevention layer 24 include a single-layer structure constituted by a low-refractive-index layer, a two-layer structure in which a low-refractive-index layer and a high-refractive-index layer are arranged such that the low-refractive-index layer serves as a surface layer, or a multilayer structure in which low-refractive-index layers and high-refractive-index layers are alternately laminated such that a low-refractive-index layer serves as a surface layer. The terms "high-refractive-index layer" and "low-refractive-index layer" are used to indicate a relative relationship in refractive index between adjacent layers. For example, when compared with another layer, a layer having a higher refractive index is referred to as a high-refractive-index layer, and a layer having a lower refractive index is referred to as a low-refractive-index layer. Examples of a material for forming the low-refractive-index layer include silicon oxide, magnesium fluoride, and fluorine-containing resins, while examples of a material for forming the high-refractive-index layer include titanium oxide, zinc sulfide, zirconium oxide, and niobium oxide.

For example, tint glass having low visible light transmittance may be used as the first substrate 11. The visible light transmittance of the tint glass may be equal to or more than 10% and equal to or less than 60%. A method for measuring the visible light transmittance has been described above. By using glass having low visible light transmittance as the first substrate 11, the effect of the first reflection prevention layer 23 and the second reflection prevention layer 24 can be further increased, and reflection of light in the gap layer G can be further reduced.

As illustrated in Fig. 16, extension portions 25 may be formed by a part of the first reflection prevention layer 23 and a part of the second reflection prevention layer 24. The extension portions 25 protrude outward in a planar direction from the laminated plate 10. The extension portions 25 have a substantially rectangular shape in plan view and extend outward of the first substrate 11 and the second substrate 12. The extension portions 25 are provided with a ventilation hole that allows the gap layer G between the light modulating member 20 and the first reflection prevention layer 23 and outside air to be communicated. In this case, even in a case where air escapes from the gap layer G between the first reflection prevention layer 23 and the second reflection prevention layer 24 during processing of the laminated plate 10, the gap layer G can be restored by injecting a gas such as air or nitrogen through the communication hole. The communication hole may be hermetically sealed with an adhesive, a liquid joining layer, or the like after the gap layer G is restored between the first reflection prevention layer 23 and the second reflection prevention layer 24. Although a place where the extension portions 25 are provided is not limited, the extension portions 25 are preferably provided in a portion other than the vicinity of a corner portion of the light modulating member 20 to suppress occurrence of a wrinkle or the like.

According to the present modification, the gap layer G is provided between the first joining layer 13 and the light modulating member 20. With this configuration, thermal expansion of the light modulating member 20 is absorbed by the gap layer G when the laminated plate 10 is heated to a high temperature during use. In other words, the effect of suppressing movement of the liquid crystal molecules in the liquid crystal layer 50 between the second bead spacers 70 and the first member 30 and between the second bead spacers 70 and the second member 40 is more likely to be obtained by the gap layer G. This makes it possible to suppress uneven distribution of the liquid crystal molecules in the liquid crystal layer 50 of the light modulating member 20, thereby suppressing degradation of the outer appearance of the laminated plate 10.

According to the present modification, by providing the gap layer G between the first reflection prevention layer 23 and the second reflection prevention layer 24, reflection of light on an interface between the light modulating member 20 and the gap layer G and an interface between the first joining layer 13 and the gap layer G can be reduced.

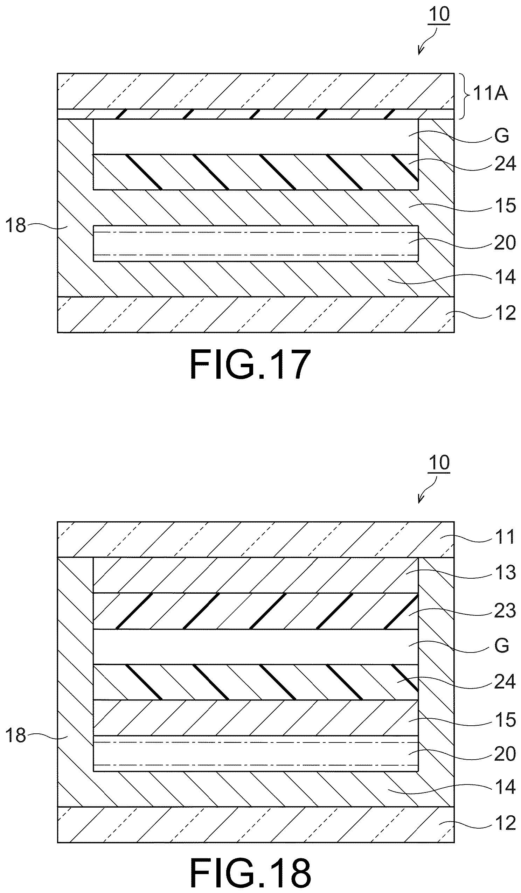

Fig. 17 illustrates another example of the laminated plate 10 according to the fourth modification. As illustrated in Fig. 17, a first substrate 11A having an anti reflection (AR) function may be used as the first substrate. In this case, it is unnecessary to provide the first joining layer 13 and the first reflection prevention layer 23.

In Fig. 17, the first substrate 11A may have a multilayer structure. For example, the first substrate 11A may include a pair of glass plates and a joining layer located between the pair of glass plates. This joining layer may be a joint body containing a pressure-sensitive adhesive component such as polyvinyl butyral (PVB).

### (Fifth Modification)

Fig. 18 illustrates a laminated plate 10 according to a fifth modification. The laminated plate 10 illustrated in Fig. 18 includes the first substrate 11, the first joining layer 13, the first reflection prevention layer 23, the second reflection prevention layer 24, the third joining layer 15, the light modulating member 20, the second joining layer 14, and the second substrate 12. The first substrate 11, the first joining layer 13, the first reflection prevention layer 23, the second reflection prevention layer 24, the third joining layer 15, the third joining layer 15, the light modulating member 20, the second joining layer 14, and the second substrate 12 are laminated in this order. The gap layer G is provided between the first joining layer 13 and the light modulating member 20, more specifically, between the first reflection prevention layer 23 and the second reflection prevention layer 24. The first joining layer 13 and the second joining layer 14 are connected to each other by the outer periphery joining layer 18.

In Fig. 18, the first joining layer 13 is made of a joint body containing a non-pressure-sensitive adhesive component such as an OCA or an OCR. The planar shape of the first joining layer 13 may be identical to the planar shape of the first reflection prevention layer 23. The planar shape of the first joining layer 13 may be smaller than the planar shape of the first substrate 11.

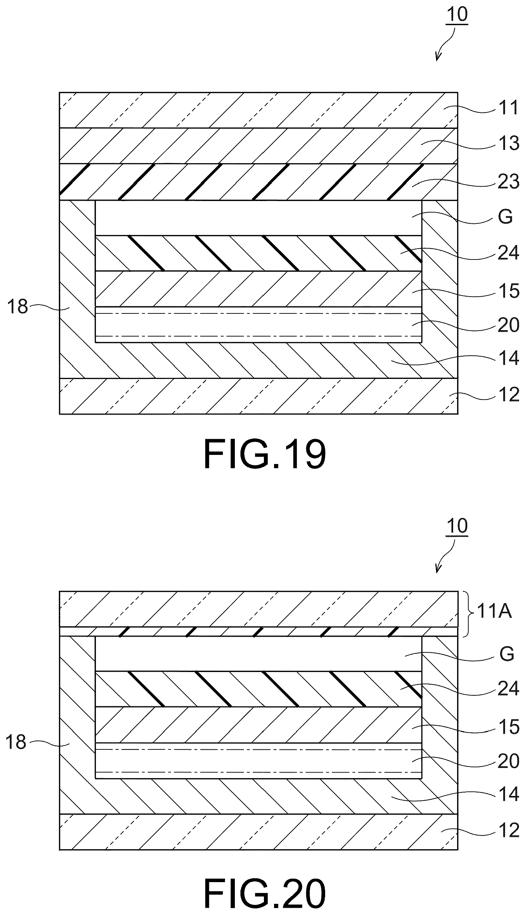

Fig. 19 illustrates another example of the laminated plate 10 according to the fifth modification. In Fig. 19, the first joining layer 13 is made of a joint body containing a non-pressure-sensitive adhesive component such as an OCA or an OCR. The planar shapes of the first joining layer 13 and the first reflection prevention layer 23 may be identical to the planar shape of the first substrate 11. The planar shapes of the first joining layer 13 and the first reflection prevention layer 23 may be larger than the planar shapes of the gap layer G, the second reflection prevention layer 24, the third joining layer 15, and the light modulating member 20.

Fig. 20 illustrates another example of the laminated plate 10 according to the fifth modification. As illustrated in Fig. 20, the first substrate 11A having an anti reflection (AR) function may be used as the first substrate. In this case, it is unnecessary to provide the first joining layer 13 and the first reflection prevention layer 23.

In Fig. 20, the first substrate 11A may have a multilayer structure. For example, the first substrate 11A may include a pair of glass plates and a joining layer located between the pair of glass plates. This joining layer may be a joint body containing a pressure-sensitive adhesive component such as polyvinyl butyral (PVB).

In Figs. 18 to 20, configurations other than those described above may be similar to those of the fourth modification illustrated in Fig. 16.

### (Sixth Modification)

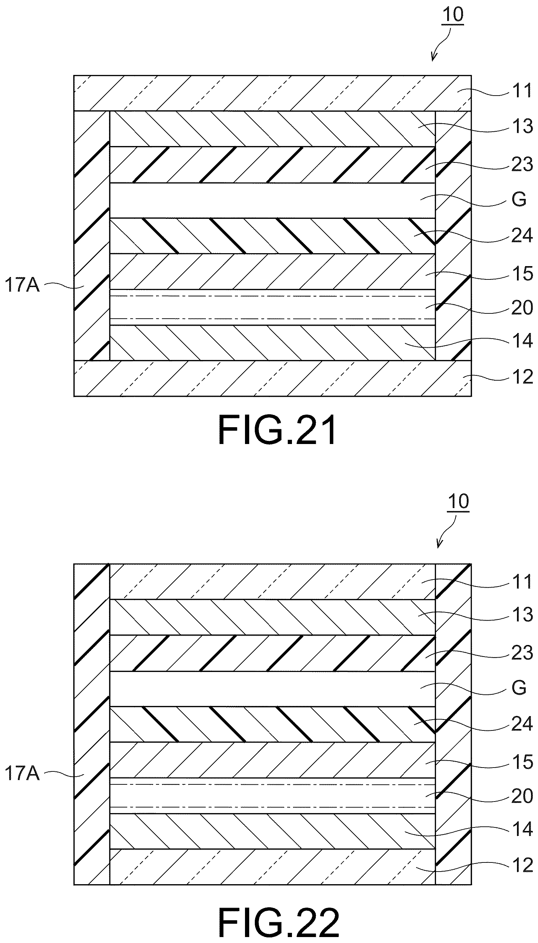

Fig. 21 illustrates a laminated plate 10 according to a sixth modification. The laminated plate 10 illustrated in Fig. 21 includes the first substrate 11, the first joining layer 13, the first reflection prevention layer 23, the second reflection prevention layer 24, the third joining layer 15, the light modulating member 20, the second joining layer 14, and the second substrate 12. The first substrate 11, the first joining layer 13, the first reflection prevention layer 23, the second reflection prevention layer 24, the third joining layer 15, the light modulating member 20, the second joining layer 14, and the second substrate 12 are laminated in this order. The gap layer G is provided between the first joining layer 13 and the light modulating member 20, more specifically, between the first reflection prevention layer 23 and the second reflection prevention layer 24. The first substrate 11 and the second substrate 12 are connected to each other by an outer periphery fixation member 17A.

In the laminated plate 10 illustrated in Fig. 21, the first joining layer 13 is made of a joint body containing a non-pressure-sensitive adhesive component such as an OCA or an OCR. The second joining layer 14 is made of a joint body containing a non-pressure-sensitive adhesive component such as an OCA or an OCR. The planar shapes of the first joining layer 13, the first reflection prevention layer 23, the gap layer G, the third joining layer 15, the light modulating member 20, and the second joining layer 14 may be identical. The planar shapes of the first joining layer 13, the first reflection prevention layer 23, the gap layer G, the third joining layer 15, the light modulating member 20, and the second joining layer 14 may be smaller than the planar shapes of the first substrate 11 and the second substrate 12.

The outer periphery fixation member 17A is a frame-shaped member in plan view, more specifically, a member having a rectangular frame shape (a rectangular shape with a hollow center) or a shape obtained by cutting a part of the rectangular frame shape. The outer periphery fixation member 17A is provided in thickness portions of the first joining layer 13, the first reflection prevention layer 23, the gap layer G, the second reflection prevention layer 24, the third joining layer 15, the light modulating member 20, and the second joining layer 14 in cross-sectional view. The outer periphery fixation member 17A is provided so as to surround the first joining layer 13, the first reflection prevention layer 23, the gap layer G, the second reflection prevention layer 24, the third joining layer 15, the light modulating member 20, and the second joining layer 14 in plan view. An inner periphery of the outer periphery fixation member 17A may have a size identical to the outer peripheries of the first joining layer 13, the first reflection prevention layer 23, the gap layer G, the second reflection prevention layer 24, the third joining layer 15, the light modulating member 20, and the second joining layer 14.

The outer periphery fixation member 17A may be, for example, made of a sealing material, an adhesive, a resin, or a metal. Examples of the sealing material include thermosetting resins such as epoxy resins and acrylic resins, and ultraviolet-curable resins. The adhesive may be, for example, a double-sided tape using an acrylic foam as a base material.

In the laminated plate 10 illustrated in Fig. 21, the first joining layer 13 and the second joining layer 14 may be made of a joint body containing a pressure-sensitive adhesive component such as polyvinyl butyral (PVB). Alternatively, one of the first joining layer 13 and the second joining layer 14 may be made of a joint body containing a non-pressure-sensitive adhesive component such as an OCA or an OCR, and the other one of the first joining layer 13 and the second joining layer 14 may be made of a joint body containing a pressure-sensitive adhesive component such as polyvinyl butyral (PVB).

Fig. 22 illustrates another example of the laminated plate 10 according to the sixth modification. In Fig. 22, the outer periphery fixation member 17A is provided in thickness portions of the first substrate 11, the first joining layer 13, the first reflection prevention layer 23, the gap layer G, the second reflection prevention layer 24, the third joining layer 15, the light modulating member 20, the second joining layer 14, and the second substrate 12 in cross-sectional view. The outer periphery fixation member 17A is provided so as to surround the first substrate 11, the first joining layer 13, the first reflection prevention layer 23, the gap layer G, the second reflection prevention layer 24, the third joining layer 15, the light modulating member 20, the second joining layer 14, and the second substrate 12 in plan view. An inner periphery of the outer periphery fixation member 17A may have a size identical to the outer peripheries of the first substrate 11, the first joining layer 13, the first reflection prevention layer 23, the gap layer G, the second reflection prevention layer 24, the third joining layer 15, the light modulating member 20, the second joining layer 14, and the second substrate 12. A thickness of the outer periphery fixation member 17A may be identical to a total thickness of the first substrate 11, the first joining layer 13, the first reflection prevention layer 23, the gap layer G, the second reflection prevention layer 24, the third joining layer 15, the light modulating member 20, the second joining layer 14, and the second substrate 12.

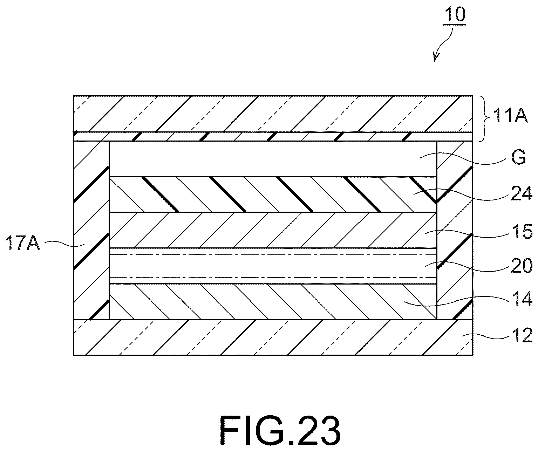

Fig. 23 illustrates another example of the laminated plate 10 according to the sixth modification. As illustrated in Fig. 23, the first substrate 11A having an anti reflection (AR) function may be used as the first substrate. In this case, it is unnecessary to provide the first joining layer 13 and the first reflection prevention layer 23.

In Fig. 23, the first substrate 11A may have a multilayer structure. For example, the first substrate 11A may include a pair of glass plates and a joining layer located between the pair of glass plates. This joining layer may be a joint body containing a pressure-sensitive adhesive component such as polyvinyl butyral (PVB).

In Figs. 21 to 23, configurations other than those described above may be similar to those of the fourth modification illustrated in Fig. 16.

### (Seventh Modification)

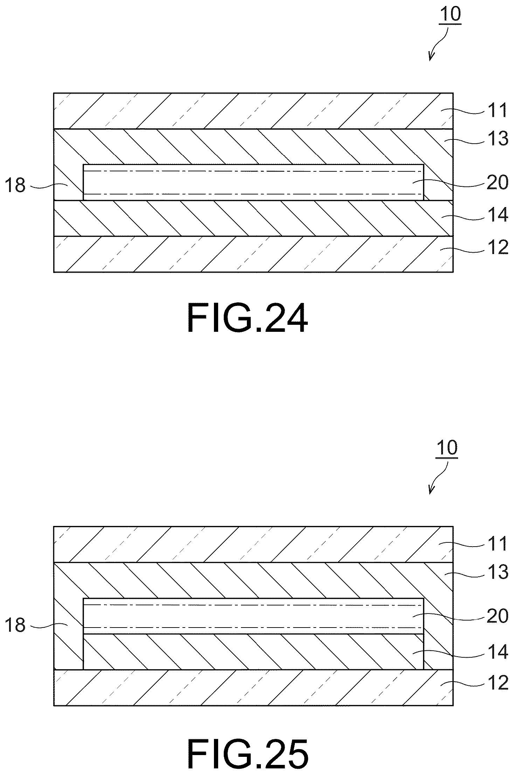

Fig. 24 illustrates a laminated plate 10 according to a seventh modification. As illustrated in Fig. 24, the laminated plate 10 according to the present modification includes the first substrate 11, the first joining layer 13, the light modulating member 20, the second joining layer 14, and the second substrate 12. The first substrate 11, the first joining layer 13, the light modulating member 20, the second joining layer 14, and the second substrate 12 are laminated in this order. The first joining layer 13 and the second joining layer 14 are connected to each other by the outer periphery joining layer 18.

The first joining layer 13 may be made of a joint body containing a non-pressure-sensitive adhesive component such as an OCR. The second joining layer 14 may be made of a joint body containing a non-pressure-sensitive adhesive component such as an OCA.

The outer periphery joining layer 18 is a frame-shaped member in plan view, more specifically, a member having a rectangular frame shape (a rectangular shape with a hollow center) or a shape obtained by cutting a part of the rectangular frame shape. The outer periphery joining layer 18 is provided in the thickness portion of the light modulating member 20 in cross-sectional view. The outer periphery joining layer 18 is provided so as to surround the light modulating member 20 in plan view. An inner periphery of the outer periphery joining layer 18 may have a size identical to the outer periphery of the light modulating member 20. The outer periphery joining layer 18 may be made of a material identical to that of the first joining layer 13 and may be integral with the first joining layer 13.

Fig. 25 illustrates another example of the laminated plate 10 according to the seventh modification. As illustrated in Fig. 25, the outer periphery joining layer 18 may be provided in the thickness portions of the light modulating member 20 and the second joining layer 14. The outer periphery joining layer 18 is provided so as to surround the light modulating member 20 and the second joining layer 14 in plan view. An inner periphery of the outer periphery joining layer 18 may have a size identical to the outer peripheries of the light modulating member 20 and the second joining layer 14. The outer periphery joining layer 18 may be made of a material identical to that of the first joining layer 13 and may be integral with the first joining layer 13. The outer periphery joining layer 18 may be directly connected to the second substrate 12.

In Figs. 24 and 25, configurations other than those described above may be similar to those of the fifth modification illustrated in Fig. 13.

The plurality of constituent elements disclosed in the above embodiment and modifications may be combined as appropriate as needed. Alternatively, some constituent elements may be deleted from the constituent elements disclosed in the above embodiment and modifications.

## Claims

1. A light modulating member comprising:
a first member including a first base member;
a second member including a second base member opposed to the first base member;
a liquid crystal layer located between the first member and the second member; and
a plurality of first bead spacers and a plurality of second bead spacers that are provided between the first member and the second member so as to maintain a thickness of the liquid crystal layer, wherein
an average particle diameter of the second bead spacers is larger than an average particle diameter of the first bead spacers, and
the second bead spacers are softer than the first bead spacers.

2. The light modulating member according to claim 1, wherein
in a case where an amount of deformation of the first bead spacers and an amount of deformation of the second bead spacers are measured by applying a load to the first bead spacers and the second bead spacers up to 5 mN at a speed of 0.29 mN/sec by using a 50-µm square flat indenter, a ratio of the amount of deformation of the second bead spacers to the amount of deformation of the first bead spacers is equal to or more than 3.21 and equal to or less than 4.49.

3. A light modulating member comprising:
a first member including a first base member;
a second member including a second base member opposed to the first base member;
a liquid crystal layer located between the first member and the second member; and
a plurality of first bead spacers and a plurality of second bead spacers that are provided between the first member and the second member so as to maintain a thickness of the liquid crystal layer, wherein
an average particle diameter of the second bead spacers is larger than an average particle diameter of the first bead spacers, and
in a case where an amount of deformation of the first bead spacers and an amount of deformation of the second bead spacers are measured by applying a load to the first bead spacers and the second bead spacers up to 5 mN at a speed of 0.29 mN/sec by using a 50-µm square flat indenter, a ratio of the amount of deformation of the second bead spacers to the amount of deformation of the first bead spacers is equal to or more than 3.21 and equal to or less than 4.49.

4. The light modulating member according to claim 1 or 3, wherein
an amount of deformation of the second bead spacers measured by applying a load to the second bead spacers up to 5 mN at a speed of 0.29 mN/sec by using a 50-µm square flat indenter is equal to or more than 2.38 µm and equal to or less than 3.32 µm.

5. A light modulating member comprising:
a first member including a first base member;
a second member including a second base member opposed to the first base member;
a liquid crystal layer located between the first member and the second member; and
a plurality of first bead spacers and a plurality of second bead spacers that are provided between the first member and the second member so as to maintain a thickness of the liquid crystal layer, wherein
an average particle diameter of the second bead spacers is larger than an average particle diameter of the first bead spacers, and
an amount of deformation of the second bead spacers measured by applying a load to the second bead spacers up to 5 mN at a speed of 0.29 mN/sec by using a 50-µm square flat indenter is equal to or more than 2.38 µm and equal to or less than 3.32 µm.

6. The light modulating member according to any one of claims 1, 3, and 5, wherein
in a case where a load is applied to the second bead spacers up to 5 mN at a speed of 0.29 mN/sec by using a 50-µm square flat indenter, an amount by which the second bead spacers are deformed during five seconds where the load is maintained after the load reaches 5 mN is equal to or less than 0.04 µm.

7. The light modulating member according to any one of claims 1, 3, and 5, wherein
the average particle diameter of the second bead spacers is equal to or more than 110% and equal to or less than 130% of the average particle diameter of the first bead spacers.

8. The light modulating member according to any one of claims 1, 3, and 5, wherein
the number of second bead spacers is larger than the number of first bead spacers.

9. The light modulating member according to any one of claims 1, 3, and 5, wherein
a color of the first bead spacers and a color of the second bead spacers are black.

10. The light modulating member according to any one of claims 1, 3, and 5, wherein
the second bead spacers have adhesiveness.

11. A laminated plate comprising:
a first substrate and a second substrate that are opposed to each other; and
the light modulating member according to any one of claims 1, 3, and 5 that is located between the first substrate and the second substrate.

12. The laminated plate according to claim 11, further comprising:
a first joining layer that joins the first substrate and the light modulating member to each other; and
a second joining layer that joins the second substrate and the light modulating member to each other.

13. The laminated plate according to claim 12, wherein
a thickness of the first joining layer and a thickness of the second joining layer are uniform within a plane.

14. The laminated plate according to claim 12, wherein
the first joining layer and the second joining layer are connected to each other by an insertion member.

15. The laminated plate according to claim 14, wherein
a material of the insertion member is polyethylene terephthalate, polycarbonate, or an OCR.

16. The laminated plate according to claim 12, wherein
an outer periphery fixation member is provided along outer peripheries of the first substrate, the first joining layer, the light modulating member, the second joining layer, and the second substrate.

17. The laminated plate according to claim 12, wherein
a gap layer is provided between the first joining layer and the light modulating member.

18. The laminated plate according to claim 17, wherein
a reflection prevention layer is provided so as to face the gap layer.

19. The laminated plate according to claim 18, wherein
the first substrate is tint glass.

20. The laminated plate according to claim 17, wherein
the first substrate has an anti reflection function.
